# EUROPEAN PATENT APPLICATION

(11) **EP 4 654 122 A1**
(43) Date of publication of application: **26.11.2025**
(21) Application number: 24835057.1
(22) Date of filing: 26.02.2024
(51) Int. Cl.: G06T 5/00

(54) **IMAGE PROCESSING METHOD AND APPARATUS, AND ELECTRONIC DEVICE**

(30) Priority: 03.07.2023 CN 202310809777
(71) Applicant: Honor Device Co., Ltd., Shenzhen, Guangdong 518040 (CN)
(72) Inventor: XIAO, Yuwei, Shenzhen, Guangdong 518040 (CN)
(74) Representative: MERH-IP Matias Erny Reichl Hoffmann Patentanwälte PartG mbB
(86) International application number: PCT/CN2024/078578
(87) International publication number: WO 2025/007570

(57) **Abstract**

This application provides an image processing method and apparatus, and an electronic device, and belongs to the field of smart terminal technologies. The method includes: creating at least one second mesh layer if a real frame image includes a reconstructed region satisfying a first preset condition and/or a second preset condition, and drawing pixels of the reconstructed region at a first mesh layer and the at least one second mesh layer respectively based on a reconstruction attribute of the reconstructed region. In this way, regardless of how complex a geometric edge of a discontinuous image region is, pixels having different attributes in the discontinuous image region can be respectively drawn at different mesh layers in a mesh reconstruction manner, to ensure that a pixel region in each mesh is a continuous pixel region. Therefore, when image warping processing is further performed on a mesh with continuous depths, a mesh pattern is not severely deformed, thereby ensuring image continuity, resolving a problem of distortion of the discontinuous image region having the complex geometric edge, and improving game experience of a user.

## Description

This application claims priority to Chinese Patent Application No. 202310809777.1, filed with the China National Intellectual Property Administration on July 03, 2023 and entitled "IMAGE PROCESSING METHOD AND APPARATUS, AND ELECTRONIC DEVICE", which is incorporated herein by reference in its entirety.

### TECHNICAL FIELD

This application relates to the field of smart terminal technologies, and in particular, to an image processing method and apparatus, and an electronic device.

### BACKGROUND

A video frame interpolation technology aims to improve a frame rate and smoothness of a video, making the video "buttery smooth". Through interpolation of one predicted frame (or referred to as an intermediate frame, a transition frame, or the like) between adjacent real frames (or referred to as original frames), a frame rate of the video can be doubled. Picture quality of the predicted frame is directly related to smoothness of the video. A motion direction and a speed of each object in an image are calculated by using image information of two adjacent frames, and each object in the image is correspondingly moved, so that a predicted frame can be obtained.

In a current predicted frame generation technology, image warping is a manner to better ensure image continuity. However, in some image regions, an image warping operation may cause local image distortion, resulting in a noticeable difference between a predicted frame image and a real frame image, causing severe degradation in user visual experience.

### SUMMARY

This application provides an image processing method and apparatus, and an electronic device, to resolve a problem of distortion of a local image, and in particular, to resolve a problem of distortion of a discontinuous image region having a complex geometric edge.

According to a first aspect, this application provides an image processing method, including: obtaining resource information, where the resource information includes a real frame image, depth information of the real frame image, and pixel attribute information of the real frame image, where the pixel attribute information is used to represent a static pixel and a dynamic pixel; creating a first mesh layer of the real frame image; creating at least one second mesh layer if the real frame image includes a reconstructed region satisfying a first preset condition and/or a second preset condition, and drawing pixels of the reconstructed region at the first mesh layer and the at least one second mesh layer respectively based on a reconstruction attribute of the reconstructed region, where the first preset condition is that the reconstructed region includes static pixels having different depth levels, and the second preset condition is that the reconstructed region includes both a static pixel and a dynamic pixel; and reconstruction attributes of pixels drawn at different mesh layers of the first mesh layer and the at least one second mesh layer are different, where the reconstruction attribute includes a depth level and a pixel attribute; obtaining a first motion vector corresponding to a first image in the first mesh layer and a second motion vector corresponding to each second image in each second mesh layer, where the first image refers to a real frame image region included in the first mesh layer; and the second image refers to a real frame image region included in the second mesh layer; performing image warping processing on the first image based on the first motion vector to generate a first warped image; performing image warping processing on each second image based on each second motion vector to generate at least one second warped image; and performing superimposition processing on the first warped image and the at least one second warped image to generate a predicted frame image.

In this way, in the image processing method, a discontinuous image region, namely, the reconstructed region, in the real frame image is first identified. Then, a plurality of mesh layers are constructed based on the reconstruction attribute of the reconstructed region, and the pixels having the different attributes in the reconstructed region are respectively drawn at the different mesh layers. Further, the image warping processing is performed on each mesh layer based on a corresponding motion vector. In this way, regardless of how complex a geometric edge of a discontinuous image region is, pixels having different attributes in the discontinuous image region can be respectively drawn at different mesh layers in a mesh reconstruction manner, to ensure that a pixel region in each mesh is a continuous pixel region. Therefore, when image warping processing is further performed on a mesh with continuous depths, a mesh pattern is not severely deformed, thereby ensuring image continuity, resolving a problem of distortion of the discontinuous image region having the complex geometric edge, and improving game experience of a user.

In an implementation, creating the at least one second mesh layer if the real frame image includes the reconstructed region satisfying the first preset condition and/or the second preset condition, and drawing the pixels of the reconstructed region at the first mesh layer and the at least one second mesh layer respectively based on the reconstruction attribute of the reconstructed region includes: creating one second mesh layer if the real frame image includes a reconstructed region satisfying the first preset condition; drawing a static pixel of a first depth level in the reconstructed region at the first mesh layer; and drawing a static pixel of a second depth level in the reconstructed region at the second mesh layer, where the first depth level and the second depth level are different depth levels.

In this way, for the reconstructed region, pixels having different reconstruction attributes can be drawn at the first mesh layer and the second mesh layer respectively. For example, the static pixel of the first depth level in the reconstructed region may be drawn at the first mesh layer, and the static pixel of the second depth level in the reconstructed region may be drawn at the second mesh layer.

In an implementation, creating the at least one second mesh layer if the real frame image includes the reconstructed region satisfying the first preset condition and/or the second preset condition, and drawing the pixels of the reconstructed region at the first mesh layer and the at least one second mesh layer respectively based on the reconstruction attribute of the reconstructed region includes: creating one second mesh layer if the real frame image includes a reconstructed region satisfying the second preset condition and depth levels of static pixels of each reconstructed region are the same; and drawing a static pixel in the reconstructed region at the first mesh layer, and drawing a dynamic pixel in the reconstructed region at the second mesh layer; or drawing a dynamic pixel in the reconstructed region at the first mesh layer, and drawing a static pixel in the reconstructed region at the second mesh layer.

In this way, the static pixel and the dynamic pixel in the reconstructed region can be respectively drawn at different mesh layers, to obtain respective continuous pixel regions.

In an implementation, creating the at least one second mesh layer if the real frame image includes the reconstructed region satisfying the first preset condition and/or the second preset condition, and drawing the pixels of the reconstructed region at the first mesh layer and the at least one second mesh layer respectively based on the reconstruction attribute of the reconstructed region includes: creating two second mesh layers if the real frame image includes a reconstructed region satisfying the second preset condition and depth levels of static pixels of each reconstructed region are different, or if the real frame image includes a reconstructed region satisfying the first preset condition and the second preset condition; and drawing a static pixel of a first depth level in the reconstructed region at the first mesh layer, drawing a static pixel of a second depth level in the reconstructed region at a 1^{st} second mesh layer, and drawing a dynamic pixel in the reconstructed region at a 2^{nd} second mesh layer; or drawing a dynamic pixel in the reconstructed region at the first mesh layer, drawing a static pixel of a first depth level in the reconstructed region at a 1^{st} second mesh layer, and drawing a static pixel of a second depth level in the reconstructed region at a 2^{nd} second mesh layer; or drawing a static pixel of a first depth level in the reconstructed region at the first mesh layer, drawing a dynamic pixel in the reconstructed region at a 1^{st} second mesh layer, and drawing a static pixel of a second depth level in the reconstructed region at a 2^{nd} second mesh layer, where the first depth level and the second depth level are different depth levels.

In this way, the static pixels of different depth levels and the dynamic pixel in the reconstructed region can be respectively drawn at different mesh layers, to obtain respective continuous pixel regions.

In an implementation, the method further includes: marking reconstruction attribute information of each reconstructed region to obtain a marked map, where the reconstruction attribute information includes reconstruction type information and depth level information; and determining, based on the reconstruction type information and the depth level information, a quantity of second mesh layers and reconstruction attributes of pixels drawn at different mesh layers of the first mesh layer and the at least one second mesh layer.

In this way, information such as a depth level and a pixel attribute of each region in the real frame image can be determined based on the marked map, to further perform mesh reconstruction processing.

In an implementation, the method further includes: dividing the real frame image into a plurality of working groups, where each working group includes a plurality of pixels; determining, based on the depth information of the real frame image and the pixel attribute information of the real frame image, that the working group including static pixels having different depth levels in the real frame image is the reconstructed region satisfying the first preset condition; and/or determining, based on the pixel attribute information of the real frame image, that the working group including both a static pixel and a dynamic pixel in the real frame image is the reconstructed region satisfying the second preset condition.

In an implementation, determining, based on the depth information of the real frame image and the pixel attribute information of the real frame image, that the working group including the static pixels having the different depth levels in the real frame image is the reconstructed region satisfying the first preset condition includes: determining, among the plurality of working groups based on the pixel attribute information of the real frame image, a first working group including a static pixel; determining, among the first working group based on the depth information of the real frame image, a second working group including a pixel whose depth value is within a preset range and differs from a depth value of a surrounding pixel by a preset threshold; determining a maximum depth value of each second working group; determining a minimum value of maximum depth values as a depth threshold of the real frame image; determining, among the plurality of working groups, a third working group including a static pixel of the first depth level and a static pixel of the second depth level, where a depth value of the static pixel of the first depth level is greater than the depth threshold, and a depth value of the static pixel of the second depth level is less than or equal to the depth threshold; and determining the third working group as the reconstructed region satisfying the first preset condition.

In this way, the depth threshold can be first calculated based on depth information of the static pixels in the real frame image. Then, each reconstructed region satisfying the first preset condition is determined based on the depth threshold.

In an implementation, performing the image warping processing on the first image based on the first motion vector to generate the first warped image includes: setting depth information of each first mesh in the first mesh layer; for each first mesh in the first mesh layer, determining a first motion vector of each vertex of the first mesh, and moving the first mesh based on the first motion vector of each vertex of the first mesh; and when each first mesh is moved to a target position, determining a coverage relationship between the first mesh and another first mesh at the target position based on depth information of the first mesh and depth information of the another first mesh at the target position.

In this way, because one mesh is moved at the first mesh layer based on a motion vector with reference to pixel depth information, correct depth ordering between different objects at the first mesh layer can be ensured.

In an implementation, performing the image warping processing on each second image based on each second motion vector to generate the at least one second warped image includes: setting depth information of each second mesh in the second mesh layer; for each second mesh in the second mesh layer, determining a second motion vector of each vertex of the second mesh, and moving the second mesh based on the second motion vector of each vertex of the second mesh; and when each second mesh is moved to a target position, determining a coverage relationship between the second mesh and another second mesh at the target position based on depth information of the second mesh and depth information of the another second mesh at the target position.

In this way, because one mesh is moved at the second mesh layer based on a motion vector with reference to pixel depth information, correct depth ordering between different objects at the second mesh layer can be ensured.

In an implementation, performing the superimposition processing on the first warped image and the at least one second warped image to generate the predicted frame image includes: determining a coverage relationship between a first mesh in the first mesh layer and a second mesh in each second mesh layer based on the depth information of each first mesh and the depth information of each second mesh when performing the superimposition processing on the first warped image and the at least one second warped image.

In this way, determining the coverage relationship between the first mesh in the first mesh layer and the second mesh in each second mesh layer based on the depth information of each first mesh and the depth information of each second mesh can ensure correct depth ordering between different objects after superimposition.

In an implementation, the resource information is resource information in a gaming application.

According to a second aspect, this application provides an image processing apparatus, where the apparatus includes:
a resource information obtaining module, configured to obtain resource information, where the resource information includes a real frame image, depth information of the real frame image, and pixel attribute information of the real frame image;
a first mesh layer creation module, configured to create a first mesh layer of the real frame image;
a reconstruction module, configured to create at least one second mesh layer if the real frame image includes a reconstructed region satisfying a first preset condition and/or a second preset condition, and draw pixels of the reconstructed region at the first mesh layer and the at least one second mesh layer respectively based on a reconstruction attribute of the reconstructed region, where the first preset condition is that the reconstructed region includes static pixels having different depth levels, and the second preset condition is that the reconstructed region includes both a static pixel and a dynamic pixel; and reconstruction attributes of pixels drawn at different mesh layers of the first mesh layer and the at least one second mesh layer are different, where the reconstruction attribute includes a depth level and a pixel attribute;
a motion vector obtaining module, configured to obtain a first motion vector corresponding to a first image in the first mesh layer and a second motion vector corresponding to each second image in each second mesh layer, where the first image refers to a real frame image region included in the first mesh layer; and the second image refers to a real frame image region included in the second mesh layer;
a first warped image generation module, configured to perform image warping processing on the first image based on the first motion vector to generate a first warped image;
a second warped image generation module, configured to perform image warping processing on each second image based on each second motion vector to generate at least one second warped image; and
a superimposition processing module, configured to perform superimposition processing on the first warped image and the at least one second warped image to generate a predicted frame image.

According to a third aspect, this application provides an electronic device, including a memory and a processor, where the memory is coupled to the processor; the memory is configured to store computer program code, the computer program code includes computer instructions, and when the processor executes the computer instructions, the electronic device is caused to perform the method according to any one of the first aspect.

According to a fourth aspect, this application provides a computer storage medium, where the computer storage medium stores a computer program or instructions, and when the computer program or the instructions are executed, the method according to any one of the first aspect is performed.

### BRIEF DESCRIPTION OF DRAWINGS

To describe the technical solutions in embodiments of this application or in existing technologies more clearly, the accompanying drawings required for describing embodiments or existing technologies are briefly described below. Clearly, the accompanying drawings in the following description show some embodiments of this application, and a person of ordinary skill in the art may still derive other accompanying drawings from these accompanying drawings without creative efforts.
FIG. 1 is a flowchart of generating a predicted frame according to an embodiment of this application;
FIG. 2 is a diagram of image meshing according to an embodiment of this application;
FIG. 3 is a diagram of warping of an image mesh according to an embodiment of this application;
FIG. 4 is a diagram of mesh subdivision according to an embodiment of this application;
FIG. 5 is a diagram of a hardware structure of an electronic device according to an embodiment of this application;
FIG. 6 is a diagram of a software structure of an electronic device according to an embodiment of this application;
FIG. 7 is a flowchart of image processing according to an embodiment of this application;
FIG. 8 is a diagram of mesh normalization according to an embodiment of this application;
FIG. 9 is a flowchart of determining a reconstructed region satisfying a first preset condition according to an embodiment of this application;
FIG. 10A is a diagram of pixel distribution according to an embodiment of this application;
FIG. 10B is a marked map according to an embodiment of this application;
FIG. 11 is a diagram of pixel distribution of each mesh layer after mesh reconstruction processing according to an embodiment of this application;
FIG. 12 is a diagram of image warping according to an embodiment of this application;
FIG. 13A is a diagram of an application scenario according to an embodiment of this application;
FIG. 13B is a diagram of an application scenario according to an embodiment of this application; and
FIG. 14 is a diagram of a structure of an image processing apparatus according to an embodiment of this application.

### DESCRIPTION OF EMBODIMENTS

The following describes embodiments of this application with reference to the accompanying drawings.

With development of electronic technologies, refresh rates of screens of electronic devices (for example, mobile phones) are increasingly high, as are frame rates of video sources, and memory usage and rendering power consumption in the electronic device also increase accordingly. However, due to limitations on power consumption or CPU and GPU capabilities of the electronic device, a high refresh rate and a high frame rate often cause overheating or lagging of the electronic device. This affects user experience.

A mobile game is used as an example. With development and promotion of large-scale mobile games, rendering pipelines of modern mobile games are increasingly complex, and resource loads are also increasing. In addition, computational power growth of modern mobile phones does not meet a requirement of the modern large-scale mobile games, and the mobile phones are constrained by a limited battery capacity and a limited thermal dissipation capability. Therefore, developers focus on how to reduce unnecessary rendering overheads, improve a limited frame rate and smoothness, and reduce heat generation while ensuring that game picture quality is not significantly affected.

To improve user experience, developers often reduce a frame rate of a video source, and then increase a video frame rate by using a video frame interpolation technology, to halve rendering at a same frame rate. This greatly reduces power consumption of a mobile phone and reduces heat generation of the mobile phone.

The video frame interpolation technology aims to improve a frame rate and smoothness of a video, making the video "buttery smooth". Through interpolation of one predicted frame (or referred to as an intermediate frame, a transition frame, or the like) between adjacent real frames (or referred to as original frames or the like), a frame rate of the video can be doubled. Picture quality of the predicted frame is directly related to smoothness of the video. A motion direction and a speed of each object in an image are calculated by using image information of two adjacent real frames, and each object in the image is correspondingly moved, so that a predicted frame can be obtained.

As the name implies, a real frame is an original image frame in a video source, and is not an image frame generated through prediction. For example, the real frame may be an image frame drawn by a developer during development of an application such as a game, or may be an image frame captured by an image acquisition device (such as a camera) during video production.

Video frame interpolation modes may include predicted frame interpolation and predicted frame extrapolation. In the predicted frame interpolation mode, a predicted frame image is calculated based on two adjacent real frame images, and the predicted frame image is interpolated between the two real frame images, to improve a video frame rate. In the predicted frame extrapolation mode, a predicted frame image is calculated based on two adjacent real frame images, and the predicted frame image is extrapolated after the two real frame images and is used as a next frame image, to improve a video frame rate.

The following briefly describes a process of generating a predicted frame by using a game scene as an example. It should be noted that all related accompanying drawings shown in embodiments are shown in a grayscale image form.

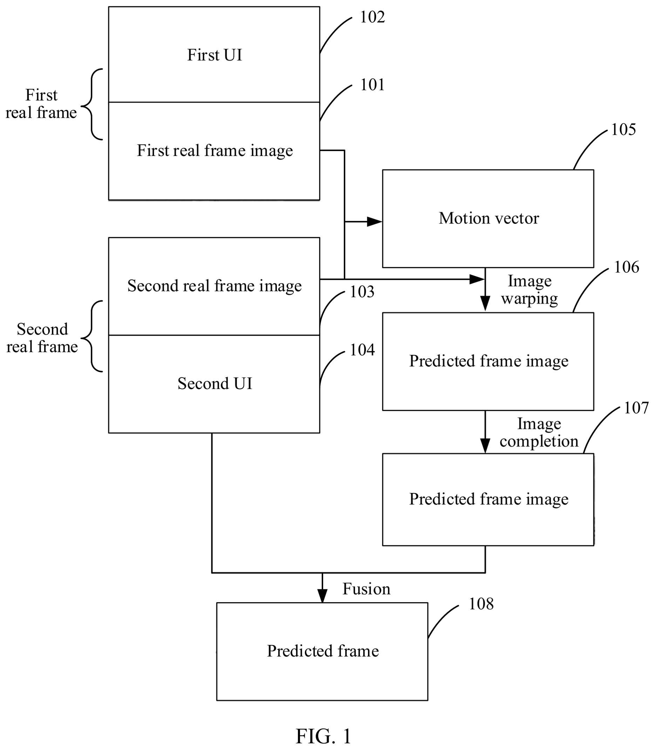

As shown in FIG. 1, a first real frame and a second real frame are two adjacent image frames in a game application. It is assumed that the second real frame is a current image frame, and the first real frame is a previous image frame of the second real frame. Based on this, a mobile phone may calculate a predicted frame based on the first real frame and the second real frame. The predicted frame interpolation mode is used as an example. The smart terminal may interpolate the calculated predicted frame between the two real frames for displaying, to improve a frame rate of a game video, and halve rendering at a same frame rate.

In this game application, a real frame includes image information and UI (User Interface, user interface) information. The image information may be understood as picture information in a video source, and the UI information is overall design information of human-machine interaction, operation logic, and interface aesthetics of software. When the mobile phone calculates the predicted frame based on the adjacent real frames, because the interface UI information does not change, the mobile phone may first separate the image information and the UI information, and calculate the predicted frame based on only the image information, to reduce an image data processing amount and improve accuracy of the predicted frame. Therefore, as shown in FIG. 1, when calculating the predicted frame, the mobile phone may first extract a first real frame image 101 and a first UI 102 from the first real frame, extract a second real frame image 103 and a second UI 104 from the second real frame, and then perform an image prediction operation based on the first real frame image 101 and the second real frame image 103, to obtain a predicted frame image 107.

Still refer to FIG. 1. When calculating the predicted frame image 107, the mobile phone may first calculate a motion vector (Motion Vector, MV) 105 of the first real frame image 101 and the second real frame image 103, and perform image warping (Warping) processing on the second real frame image 103 based on the motion vector 105, to obtain a predicted frame image 106. The image warping processing means changing a position of an image pixel by using a specific transformation, for example, a translation transformation, a rotation transformation, a scale transformation, an affine transformation, a perspective transformation, or a columnar transformation.

The image warping processing can better ensure continuous movement of objects in an image. However, because the objects in the image move at different speeds, image information overlapping or image information missing may occur in the predicted frame image 106 obtained through image warping processing. The mobile phone further needs to perform image completion (Blur) on the predicted frame image 106, to obtain the predicted frame image 107. In this case, the mobile phone fuses the second UI 104 and the predicted frame image 107, to obtain a predicted frame 108 calculated based on the first real frame and the second real frame.

It should be noted that, regardless of image warping processing or UI information fusion, information in the first real frame image or the second real frame image may be used as a reference. This is not limited in this embodiment.

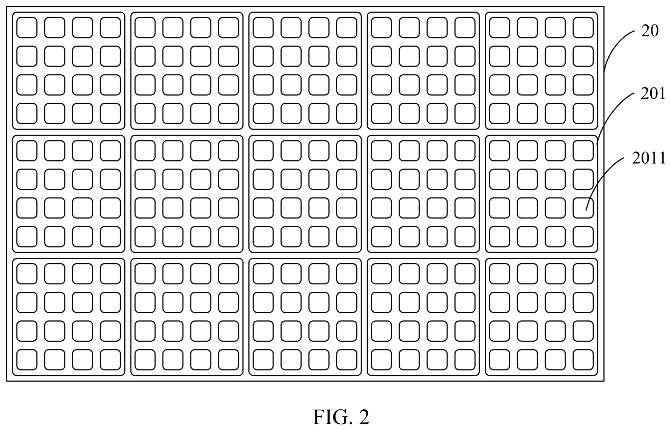

In computer graphics, a mesh geometry is usually used as a basic unit for image processing. Similarly, in the foregoing image warping processing phase, the mobile phone also performs image warping processing by using the mesh geometry as a basic unit. In other words, the mobile phone performs image warping processing by forming a triangular or quadrilateral geometric group in the image. A quadrilateral mesh is used as an example. As shown in FIG. 2, a real frame image 20 is a global working group. The real frame image 20 may be divided into a plurality of quadrilateral meshes 201, and each quadrilateral mesh 201 includes a plurality of pixels 2011. Each quadrilateral mesh 201 is a local working group, and is a basic unit for image warping processing by the mobile phone.

However, for a complex image scene (for example, an image scene in a game), a dynamic object and a static object may be included, and a depth difference of the static object is large. In addition, because games are mostly set in a virtual world, when a user plays a mobile game, an operation of the user often causes a significant shift in a game scene, which does not follow a physical rule like object movement in a physical world. Therefore, in a complex game scene, a significant shift in the scene may cause big movements of only some objects in the image, rather than big movements of all objects in the image. In other words, in the game scene, MV images calculated based on consecutive real frame images are distributed unevenly. In particular, in a discontinuous image region, MV values vary greatly. The discontinuous image region includes a static image region having a large depth information difference and/or an image region including both a dynamic pixel and a static pixel.

In this way, if a same mesh includes a discontinuous image region, using the mesh as a basic unit for image warping processing causes a local stretching problem in an image. This causes distortion of a picture of a predicted frame image, and further causes a large difference between a predicted frame and a real frame. User visual experience is poor.

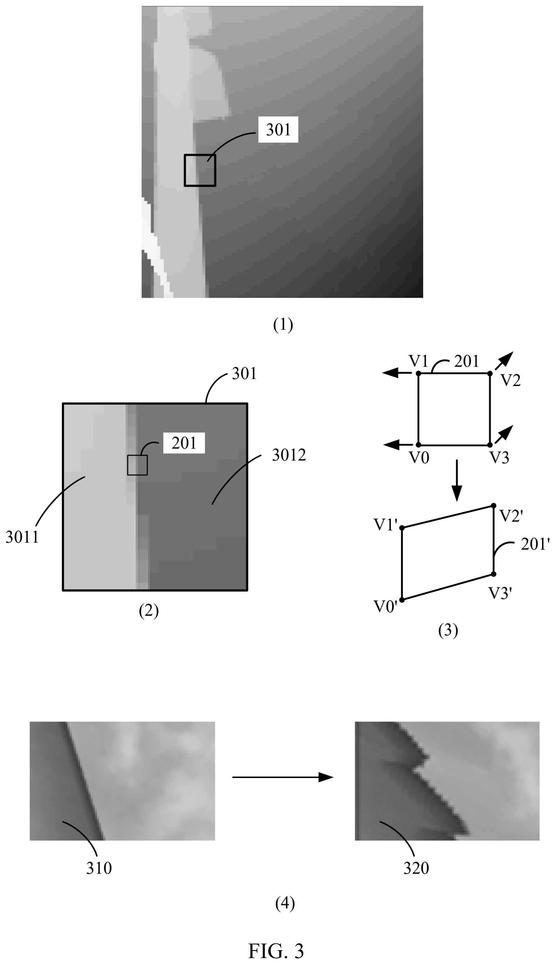

For example, (1) in FIG. 3 shows an example of a grayscale image of a motion vector frame calculated based on a game image. In the grayscale image shown in (1) in FIG. 3, a region with a lighter grayscale (where a grayscale value is closer to 1) has a smaller motion vector, and a region with a deeper grayscale (where a grayscale value is closer to 0) has a larger motion vector. Still refer to (1) in FIG. 3. Motion vectors on left and right sides of an edge region of a static object in the image frame change greatly. With reference to (1) and (2) in FIG. 3, a region 301 is used as an example. A sub-region 3011 corresponds to a pillar region in the image, a sub-region 3012 corresponds to a sky region in the image, and a motion vector corresponding to the pillar is significantly smaller than a motion vector corresponding to the sky. In other words, motion vector values on the left and right sides of the edge region of the pillar change greatly. In this case, once a difference between motion vectors corresponding to different pixel regions in a same mesh is large, image warping processing performed on the mesh based on the motion vectors inevitably causes severe deformation of the mesh figure, even some mesh figures overlap, and correctness of object depth information in the image cannot be ensured. As shown in (3) in FIG. 3, in four vertexes of a mesh 201, motion vectors corresponding to V0 and V1 greatly differ from motion vectors corresponding to V2 and V3. After each vertex is moved based on a motion vector corresponding to the vertex, the mesh 201 is warped into a mesh 201'. The mesh figure not only severely deforms, but also may cover another mesh. Consequently, some areas of the predicted frame image are distorted, especially, the discontinuous edge region is distorted. Refer to (4) in FIG. 3. For example, a discontinuous edge region 310 and a discontinuous edge region 320 are shown in (4) in FIG. 3.

Therefore, in the predicted frame image generated through image warping processing, a local stretching problem occurs in the discontinuous image region. The predicted frame image greatly differs from a real scene. Consequently, user visual experience is poor.

To resolve the foregoing technical problem, in some embodiments, for an image region with discontinuous depth values, a mobile phone may subdivide a mesh based on depth information of pixels, and perform image warping processing by using a geometric figure obtained through subdivision as a unit. This resolves a local stretching problem in an image region with discontinuous depth values in a predicted frame image, to better retain continuous graphic information, improve picture quality of the predicted frame image, and improve user visual experience.

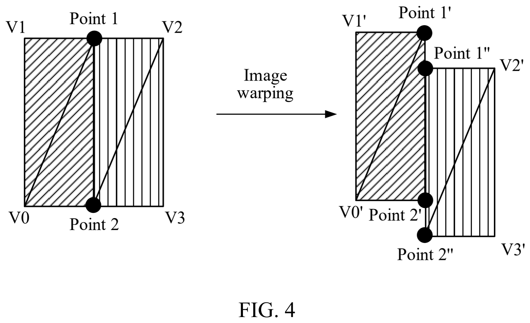

For example, as shown in FIG. 4, if there are two intersections Point 1 and Point 2 of an edge of a static object with a mesh 201, and the two intersections Point 1 and Point 2 are located on different edges of the mesh 201, the mesh 201 may be subdivided into a plurality of triangles based on the two intersections Point 1 and Point 2, so that depth information in the triangles obtained through the subdivision does not differ excessively greatly. In this way, when image warping is performed on the triangles obtained through the subdivision, each triangle obtained through the subdivision performs movement based on a motion vector corresponding to a vertex of the triangle. For example, a triangle S-Tringle1 (V0-V1-Point 1) is moved to a triangle S-Tringle1 (V0'-V1'-Point 1'), and a triangle S-Tringle2 (V0-Point 1-Point 2) is moved to a triangle S-Tringle2 (V0'-Point 1'-Point 2'). Similarly, a triangle S-Tringle1' (Point 1-Point 2-V2) is moved to a triangle S-Tringle1' (Point 1"-Point 2"-V2"), and a triangle S-Tringle2' (V2-Point 2-V3) is moved to a triangle S-Tringle2' (V2"-Point 2"-V3"). Because depth information of the triangles obtained through the subdivision is consistent, and movement directions of the triangles are also consistent, a problem that a mesh is severely deformed due to an excessively large difference in depth information of the mesh can be avoided, thereby improving picture quality, and making the predicted frame image closer to the real frame image.

However, in the foregoing solution, the mesh can be subdivided to achieve a corresponding technical effect only when the edge of the static object has two intersections with the mesh 201, and the two intersections are respectively located on different edges of the mesh 201. Therefore, the foregoing solution is only applicable to resolving a problem of distortion of a regular geometric edge, but cannot resolve a problem of distortion of a complex geometric edge.

To resolve the foregoing technical problem, in an image processing method provided in embodiments of this application, a discontinuous image region (where such region is referred to as a reconstructed region in embodiments of this application) in a real frame image is first identified. Then, a plurality of mesh layers are constructed based on a reconstruction attribute of the reconstructed region, and pixels having different attributes in the reconstructed region are respectively drawn at the different mesh layers. Further, image warping processing is performed on each mesh layer based on a corresponding motion vector. In this way, regardless of how complex a geometric edge of an image region with discontinuous depth values is, pixels having different attributes in the image region with the discontinuous depth values can be respectively drawn at different mesh layers in a mesh reconstruction manner, to ensure that a pixel region in each mesh is a pixel region with continuous depths. Therefore, when image warping processing is further performed on a mesh with continuous depths, a mesh pattern is not severely deformed, thereby ensuring image continuity, resolving a problem of distortion of the image region with the discontinuous depth values having the complex geometric edge, and improving game experience of a user.

The image processing method provided in embodiments of this application is applicable to an electronic device. Optionally, the electronic device 100 may be a terminal, or may be referred to as a terminal device, a smart terminal, or the like. The terminal may be a device such as a cellular phone (cellular phone) or a tablet computer (pad). This is not limited in this application.

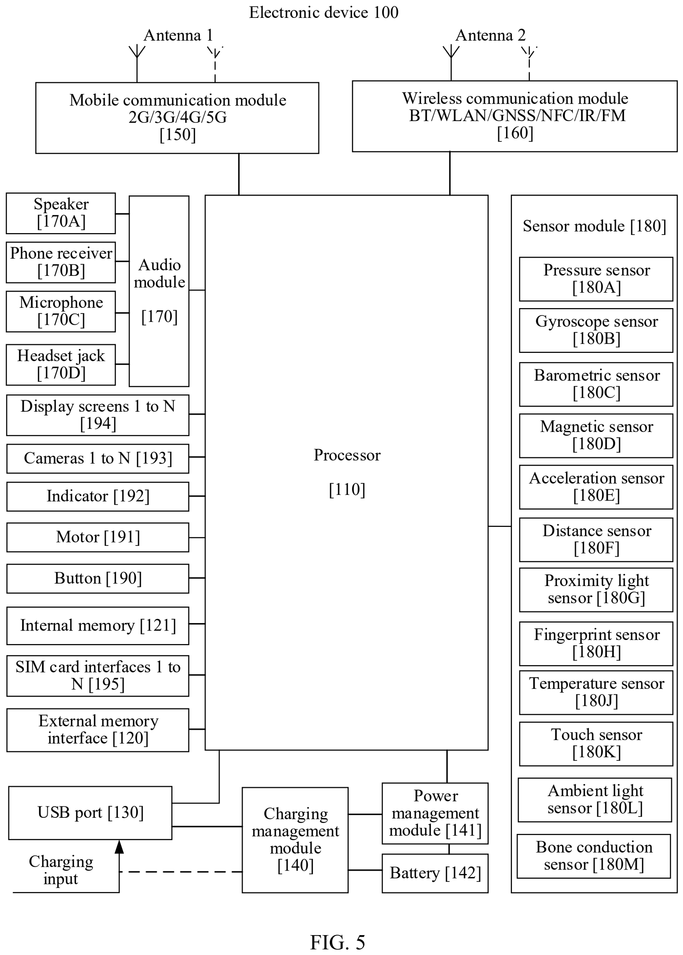

FIG. 5 is a diagram of a structure of an electronic device according to an embodiment of this application. As shown in FIG. 5, the electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a button 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric sensor 180C, a magnetic sensor 180D, an acceleration sensor 180E, a distance sensor 180F, a proximity light sensor 180G, a fingerprint sensor 180H, a temperature sensor 180J, a touch sensor 180K, an ambient light sensor 180L, a bone conduction sensor 180M, and the like.

It may be understood that the structure illustrated in this embodiment of this application does not constitute a specific limitation on the electronic device 100. In some other embodiments of this application, the electronic device 100 may include more or fewer components than those shown in the figure, some components may be combined, some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on instruction operation code and a timing signal, to complete control of fetching an instruction and executing the instruction.

A memory may also be disposed in the processor 110, and is configured to store instructions and data. In some embodiments, the memory in the processor 110 is a cache memory. The memory may store instructions or data recently used or cyclically used by the processor 110. If the processor 110 needs to use the instructions or the data again, the processor 110 may directly invoke the instructions or the data from the memory. Repeated access is avoided, and waiting time of the processor 110 is reduced, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes a serial data line (serial data line, SDA) and a serial clock line (derail clock line, SCL). In some embodiments, the processor 110 may include a plurality of sets of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of sets of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured for audio communication, to sample, quantize, and encode an analog signal. In some embodiments, the audio module 170 may be coupled to the wireless communication module 160 through the PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transfer an audio signal to the wireless communication module 160 through the UART interface, to implement a function of playing music through the Bluetooth headset.

The MIPI may be configured to connect the processor 110 to a peripheral device such as the display screen 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display screen 194 through the DSI interface, to implement a display function of the electronic device 100.

The GPIO interface may be configured by software. The GPIO interface may be configured as a control signal, or may be configured as a data signal. In some embodiments, the GPIO interface may be configured to connect the processor 110 to the camera 193, the display screen 194, the wireless communication module 160, the audio module 170, the sensor module 180, and the like. The GPIO interface may alternatively be configured as an I2C interface, an I2S interface, a UART interface, a MIPI interface, or the like.

The USB port 130 is a port that conforms to the USB standard specification, and may be specifically a Mini USB port, a Micro USB port, a USB Type C port, or the like. The USB port 130 may be configured to connect to the charger to charge the electronic device 100, or may be used for data transmission between the electronic device 100 and a peripheral device. The USB port may alternatively be configured to connect to a headset to play audio through the headset. The port may alternatively be configured to connect to another electronic device such as an AR device.

It may be understood that an interface connection relationship between modules illustrated in this embodiment of the present invention is merely an example for description, and does not constitute a limitation on the structure of the electronic device 100. In some other embodiments of this application, the electronic device 100 may use an interface connection manner different from that in the foregoing embodiments, or use a combination of a plurality of interface connection manners.

The charging management module 140 is configured to receive a charging input from a charger. The charger may be a wireless charger or a wired charger. In some wired charging embodiments, the charging management module 140 may receive a charging input from the wired charger through the USB port 130. In some wireless charging embodiments, the charging management module 140 may receive a wireless charging input by using a wireless charging coil of the electronic device 100. When charging the battery 142, the charging management module 140 may further supply power to the electronic device through the power management module 141.

The power management module 141 is configured to connect the battery 142, the charging management module 140, and the processor 110. The power management module 141 receives an input from the battery 142 and/or an input from the charging management module 140, and supplies power to the processor 110, the internal memory 121, the display screen 194, the camera 193, the wireless communication module 160, and the like. The power management module 141 may further be configured to monitor parameters such as a battery capacity, a battery cycle count, and a battery health state (power leakage and impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that includes 2G, 3G, 4G, 5G, or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal obtained after modulation by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 and at least some modules of the processor 110 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits, to the baseband processor for processing, the low-frequency baseband signal obtained through demodulation. The low-frequency baseband signal is processed by the baseband processor and then transmitted to the application processor. The AP outputs a sound signal through an audio device (which is not limited to the speaker 170A, the phone receiver 170B, and the like), or displays an image or a video through the display screen 194. In some embodiments, the modem processor may be an independent device. In some other embodiments, the modem processor may be independent of the processor 110, and is disposed in a same device as the mobile communication module 150 or another functional module.

The wireless communication module 160 may provide a solution for wireless communication including a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like applied to the electronic device 100. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert an amplified signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), a BT, a GNSS, a WLAN, NFC, FM, and/or an IR technology. The GNSS may include a global positioning system (global positioning system, GPS), a global navigation satellite system (global navigation satellite system, GLONASS), a Beidou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 100 implements a display function through the GPU, the display screen 194, the application processor, and the like. The GPU is a microprocessor for image processing and is connected to the display screen 194 and the application processor. The GPU is configured to perform mathematical and geometric computing for graphics rendering. The processor 110 may include one or more GPUs, and the GPU executes program instructions to generate or change displayed information.

The display screen 194 is configured to display an image, a video, or the like. The display screen 194 includes a display panel. The display panel may use a liquid crystal touchscreen (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a Miniled, a MicroLed, a Micro-oLed, a quantum dot light-emitting diode (quantum dot light-emitting diodes, QLED), or the like. In some embodiments, the electronic device 100 may include 1 or N display screens 194, where N is a positive integer greater than 1.

The electronic device 100 may implement a photographing function through the ISP, the camera 193, the video codec, the GPU, the display screen 194, the application processor, and the like.

The ISP is configured to process data fed back by the camera 193. For example, during photographing, a shutter is opened, and light is transmitted to a photosensitive element of the camera through a lens. An optical signal is converted into an electrical signal. The photosensitive element of the camera transmits the electrical signal to the ISP for processing, to convert the electrical signal into an image visible to naked eyes. The ISP may further perform algorithm optimization on noise, brightness, and complexion of the image. The ISP may further optimize parameters such as exposure and a color temperature of a photographing scene. In some embodiments, the ISP may be disposed in the camera 193.

The camera 193 is configured to capture a static image or video. An optical image of an object is generated through the lens and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include 1 or N camera 193, where N is a positive integer greater than 1.

The digital signal processor is configured to process a digital signal, and may process another digital signal in addition to a digital image signal. For example, when the electronic device 100 selects a frequency, the digital signal processor is configured to perform Fourier transform and the like on frequency energy.

The video codec is configured to compress or decompress a digital video. The electronic device 100 may support one or more video codecs. In this way, the electronic device 100 may play or record videos in a plurality of encoding formats, for example: moving picture experts group (moving picture experts group, MPEG)1, MPEG2, MPEG3, and MPEG4.

The NPU is a neural-network (neural-network, NN) computing processor, which quickly processes input information by learning from a structure of a biological neural network, for example, a mode of transmission between neurons in a human brain, and may further continuously perform self-learning. The NPU may be configured to implement an application such as intelligent cognition of the electronic device 100, for example, image recognition, facial recognition, voice recognition and text understanding.

The external memory interface 120 may be configured to connect to an external memory card, for example, a micro SD card, to expand a storage capability of the electronic device 100. The external memory card communicates with the processor 110 through the external memory interface 120, to implement a data storage function, for example, to store files such as music and a video into the external memory card.

The internal memory 121 may be configured to store computer-executable program code, where the computer-executable program code includes instructions. The internal memory 121 may include a program storage area and a data storage area. The program storage area may store an operating system, an application required by at least one function (such as a sound playback function and an image playback function), and the like. The data storage area may store data (for example, audio data and a phone book) and the like created during use of the electronic device 100. In addition, the internal memory 121 may include a high-speed random access memory, and may also include a non-volatile memory, for example, at least one magnetic disk storage device, a flash memory device, or a universal flash storage (universal flash storage, UFS). The processor 110 runs the instructions stored in the internal memory 121 and/or the instructions stored in the memory disposed in the processor, to perform various function applications and data processing of the electronic device 100.

The electronic device 100 may use the audio module 170, the speaker 170A, the phone receiver 170B, the microphone 170C, the headset jack 170D, the application processor, and the like to implement an audio function, such as music playback, recording, and the like.

The audio module 170 is configured to convert digital audio information into an analog audio signal output, and is also configured to convert an analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an electrical audio signal into a sound signal. Music may be listened to or a hands-free call may be answered through the speaker 170A in the electronic device 100. A plurality of speakers 170A may be disposed in the electronic device 100. For example, one speaker 170A may be disposed at a top of the electronic device 100, and one speaker 170A may be further disposed at a bottom.

The phone receiver 170B, also referred to as an "earpiece", is configured to convert an electrical audio signal into a sound signal. When a call is answered or voice information is received through the electronic device 100, the phone receiver 170B may be put close to a human ear to receive a voice. In some embodiments, the speaker 170A and the phone receiver 170B may alternatively be disposed as one component. This is not limited in this application.

The microphone 170C, also referred to as a "mike" or a "mic", is configured to convert a sound signal into an electrical signal. When making a call or sending voice information, a user may make a sound by approaching a mouth to the microphone 170C, to input a sound signal to the microphone 170C. At least one microphone 170C may be disposed in the electronic device 100. In some other embodiments, two microphones 170C may be disposed in the electronic device 100, to implement a noise reduction function in addition to collecting a sound signal. In some other embodiments, three, four, or more microphones 170C may alternatively be disposed in the electronic device 100, to collect a sound signal, implement noise reduction, recognize a sound source, implement a directional recording function, and the like.

The headset jack 170D is configured to be connected to a wired headset. The headset jack 170D may be the USB port 130, or may be a 3.5 mm open mobile electronic device platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed in the display screen 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, a capacitance between electrodes changes. The electronic device 100 determines intensity of pressure based on the change in the capacitance. When a touch operation is performed on the display screen 194, the electronic device 100 detects intensity of the touch operation according to the pressure sensor 180A. The electronic device 100 may further calculate a touch position based on a detection signal of the pressure sensor 180A. In some embodiments, touch operations performed at a same touch position but having different touch operation intensity may correspond to different operation instructions. For example, when a touch operation whose touch operation intensity is less than a first pressure threshold is performed on a short message application icon, an instruction for viewing a short message is performed. When a touch operation whose touch operation intensity is greater than or equal to the first pressure threshold is performed on the short message application icon, an instruction for creating a new short message is executed.

The gyroscope sensor 180B may be configured to determine a motion posture of the electronic device 100. In some embodiments, angular velocities of the electronic device 100 around three axes (namely, an x axis, a y axis, and a z axis) may be determined through the gyroscope sensor 180B. The gyroscope sensor 180B may be configured for image stabilization during photographing. For example, when the shutter is pressed, the gyroscope sensor 180B detects an angle at which the electronic device 100 jitters, and calculates, based on the angle, a distance for which a lens module needs to compensate, and allows the lens to cancel the jitter of the electronic device 100 through reverse motion, thereby implementing image stabilization. The gyroscope sensor 180B may be further used in navigation and a motion sensing game scenario.

The barometric sensor 180C is configured to measure atmospheric pressure. In some embodiments, the electronic device 100 calculates an altitude by using a barometric value measured by the barometric sensor 180C, to assist in positioning and navigation.

The magnetic sensor 180D includes a Hall sensor. The electronic device 100 may detect opening and closing of a flip leather case through the magnetic sensor 180D. In some embodiments, when the electronic device 100 is a flip phone, the electronic device 100 may detect opening and closing of a flip cover according to the magnetic sensor 180D, and further set features such as automatic unlocking of the flip cover based on a detected opening and closing state of the leather case or a detected opening and closing state of the flip cover.

The acceleration sensor 180E may detect magnitudes of acceleration of the electronic device 100 in various directions (usually on three axes), may detect a magnitude and a direction of gravity when the electronic device 100 is still, and may be further configured to recognize a posture of the electronic device, is applied to switching between landscape and portrait modes, and is applied to a pedometer.

The distance sensor 180F is configured to measure a distance. The electronic device 100 may measure a distance by using infrared light or a laser. In some embodiments, in a photographing scene, the electronic device 100 may measure a distance through the distance sensor 180F, to implement quick focusing.

The proximity light sensor 180G may include, for example, a light-emitting diode (LED) and an optical detector, such as a photodiode. The light-emitting diode may be an infrared light-emitting diode. The electronic device 100 emits infrared light outwards through the light-emitting diode. The electronic device 100 detects reflected infrared light from a nearby object through the photodiode. When detecting sufficient reflected light, the electronic device 100 may determine that there is an object near the electronic device 100. When detecting insufficient reflected light, the electronic device 100 may determine that there is no object near the electronic device 100. The electronic device 100 may detect, through the proximity light sensor 180G, that a user holds the electronic device 100 to approach to an ear for a call, to implement automatic screen-off to save power. The proximity light sensor 180G may be further configured to automatically unlock and lock a screen in a leather case mode and a pocket mode.

The ambient light sensor 180L is configured to sense ambient light brightness. The electronic device 100 may adaptively adjust brightness of the display screen 194 based on the sensed ambient light brightness. The ambient light sensor 180L may be further configured to automatically adjust white balance during photographing. The ambient light sensor 180L may further cooperate with the proximity light sensor 180G to detect whether the electronic device 100 is in a pocket to prevent a false touch.

The fingerprint sensor 180H is configured to collect a fingerprint. The electronic device 100 may implement fingerprint unlocking, application lock accessing, fingerprint-based photographing, fingerprint-based incoming call answering, and the like by using a feature of the collected fingerprint.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 reduces performance of a processor near the temperature sensor 180J, to reduce power consumption and implement heat protection. In some other embodiments, when the temperature is lower than another threshold, the electronic device 100 heats the battery 142, to avoid abnormal shutdown of the electronic device 100 caused by a low temperature. In some other embodiments, when the temperature is lower than still another threshold, the electronic device 100 boosts an output voltage of the battery 142, to avoid abnormal shutdown caused by a low temperature.

The touch sensor 180K is also referred to as a "touch device". The touch sensor 180K may be disposed in the display screen 194. The touch sensor 180K and the display screen 194 form a touchscreen, which is also referred to as a "touch screen". The touch sensor 180K is configured to detect a touch operation performed on or near the touch sensor. The touch sensor may transmit the detected touch operation to the application processor, to determine a touch event type. A visual output related to the touch operation may be provided through the display screen 194. In some other embodiments, the touch sensor 180K may alternatively be disposed on a surface of the electronic device 100 at a position different from that of the display screen 194.

The bone conduction sensor 180M may obtain a vibration signal. In some embodiments, the bone conduction sensor 180M may obtain a vibration signal of a vibration bone of a human vocal-cord part. The bone conduction sensor 180M may alternatively be in contact with a human pulse to receive a blood pressure pulsation signal. In some embodiments, the bone conduction sensor 180M may alternatively be disposed in a headset, to form a bone conduction headset. The audio module 170 may parse out a voice signal based on the vibration signal of the vibration bone of the vocal-cord part that is obtained by the bone conduction sensor 180M, to implement a voice function. The application processor may parse heart rate information based on the blood pressure pulsation signal obtained by the bone conduction sensor 180M, to implement a heart rate measurement function.

The button 190 includes a power-on button, a volume button, and the like. The button 190 may be a mechanical button or may be a touch key. The electronic device 100 may receive a button input and generate a button signal input related to a user setting and function control of the electronic device 100.

The motor 191 may generate a vibration prompt. The motor 191 may be configured to provide a vibration prompt for an incoming call, and may be further configured to provide vibration feedback for a touch. For example, touch operations performed on different applications (for example, photographing and audio playback) may correspond to different vibration feedback effects. The motor 191 may also correspond to different vibration feedback effects for touch operations performed on different areas of the display screen 194. Different application scenarios (for example, a time reminder, information receiving, an alarm clock, and a game) may also correspond to different vibration feedback effects. Customization of a touch vibration feedback effect may further be supported.

The indicator 192 may be an indicator light, and may be configured to indicate a charging state or a power change, or may be further configured to indicate a message, a missed call, a notification, or the like.

The SIM card interface 195 is configured to be connected to a SIM card. The SIM card may be inserted into the SIM card interface 195 or unplugged from the SIM card interface 195, to come into contact with or be separated from the electronic device 100. The electronic device 100 may support 1 or N SIM card interfaces, where N is a positive integer greater than 1. The SIM card interface 195 may support a Nano SIM card, a Micro SIM card, a SIM card, and the like. A plurality of cards may be simultaneously inserted into a same SIM card interface 195. The plurality of cards may be the same as or different from each other. The SIM card interface 195 may also be compatible with SIM cards of different types. The SIM interface 195 may also be compatible with an external memory card. The electronic device 100 interacts with a network by using a SIM card, to implement functions such as a call and data communication. In some embodiments, the electronic device 100 uses an eSIM, in other words, an embedded SIM card. The eSIM card may be embedded in the electronic device 100 and cannot be separated from the electronic device 100.

A software system of the electronic device 100 may use a layered architecture, an event-driven architecture, a micro-core architecture, a micro-service architecture, or a cloud architecture. In embodiments of the present invention, an Android system with a layered architecture is used as an example to describe a software structure of the electronic device 100.

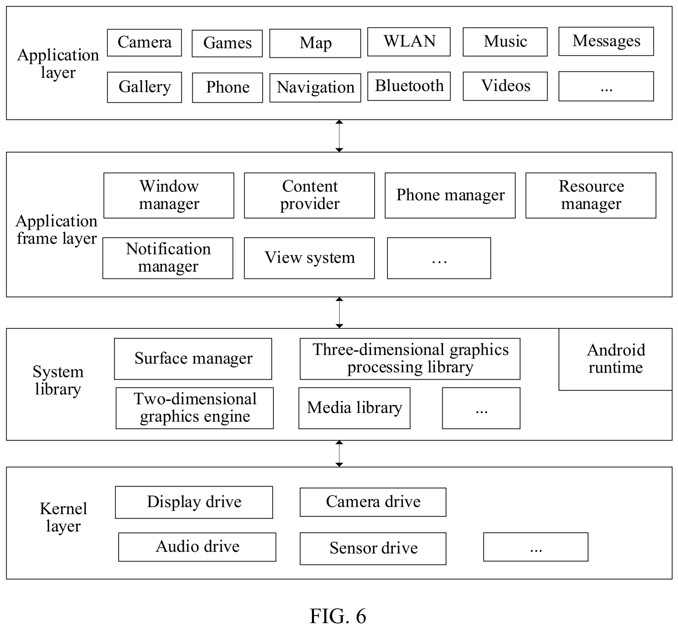

FIG. 6 is a block diagram of the software structure of the electronic device 100 according to an embodiment of this application.

The layered architecture divides software into a plurality of layers, and each layer has a clear role and responsibilities. The layers communicate with each other by using software interfaces. In some embodiments, the Android system is divided into four layers from top to bottom: an application layer; an application framework layer; an Android runtime (Android runtime) and a system library; and a kernel layer.

The application layer may include a series of application packages.

As shown in FIG. 6, the application packages may include applications such as Games, Camera, Gallery, Calendar, Phone, Map, Navigation, WLAN, Bluetooth, Music, Videos, and Messages.

The application framework layer provides an application programming interface (application programming interface, API) and a programming framework for applications at the application layer. The application framework layer includes some predefined functions.

As shown in FIG. 6, the application framework layer may include a window manager, a content provider, a view system, a phone manager, a resource manager, a notification manager, and the like.

A window manager is configured to manage a window application. The window manager may obtain a size of a display screen, determine whether there is a status bar, perform screen locking, perform screen capturing, and so on.

The content provider is configured to store and obtain data, and enable the data to be accessed by an application. The data may include a video, an image, audio, calls that are made and answered, a browsing history, a bookmark, a phonebook, and the like.

The view system includes a visual control, such as a control for displaying text or a control for displaying an image. The view system may be configured to create an application. A display interface may include one or more views. For example, a display interface including a short message notification icon may include a view for displaying text and a view for displaying an image.

The phone manager is configured to provide a communication function of the electronic device 100, for example, call status management (including connected, hang-up, and the like).

The resource manager provides various resources such as a localized character string, an icon, an image, a layout file, and a video file for an application.

The notification manager enables an application to display notification information in a status bar. The notification information may be used for conveying an informative message that may disappear automatically after a short period of time without user interaction. For example, the notification manager is used for informing completion of downloading, providing a message reminder, and so on. The notification manager may also be a notification which appears on a status bar at the top of the system in a form of a chart or a scroll bar text, such as a notification of an application running in the background, or a notification which appears on a screen in a form of a dialog window. For example, text information is displayed in the status bar, a prompt tone is generated, the electronic device vibrates, or an indicator light flashes.

The Android runtime includes a kernel library and a virtual machine. The Android runtime is responsible for scheduling and managing the Android system.

The kernel library includes two parts: one part being functional functions that java needs to call, and the other part being an Android kernel library.

The application layer and the application framework layer run in the virtual machine. The virtual machine executes Java files of the application layer and the application framework layer as binary files. The virtual machine is configured to perform functions such as object lifecycle management, stack management, thread management, security and exception management, and garbage collection.

The system library may include a plurality of functional modules. For example, the functional modules include a surface manager (surface manager), a media library (Media Library), a three-dimensional graphics processing library (for example, OpenGL ES), a 2D graphics engine (for example, SGL), and the like.

The surface manager is configured to manage a display subsystem, and provide fusion of 2D and 3D layers to a plurality of applications.

The media library supports playing and recording in a plurality of commonly used audio and video formats, static image files, and the like. The media library may support a plurality of audio and video encoding formats, for example, MPEG4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an embodiment of an image processing method provided in this application.

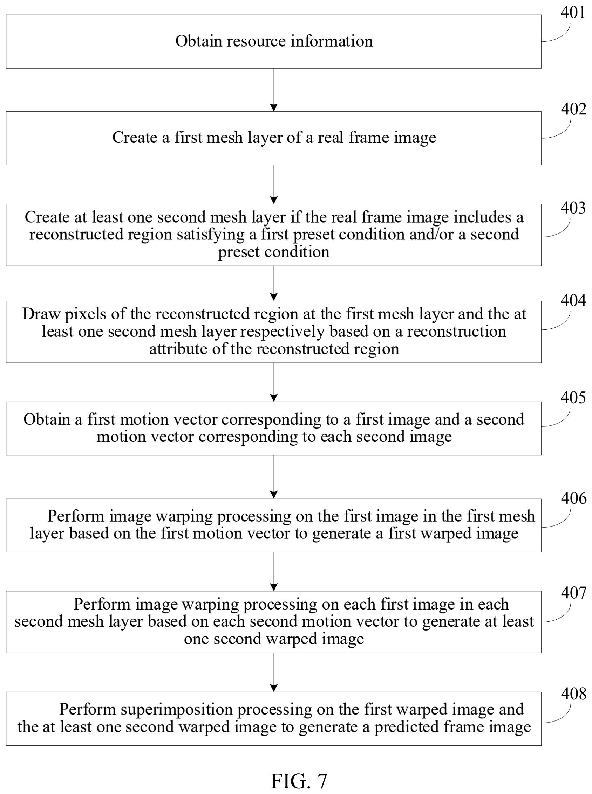

405 is a flowchart of an image processing method according to an embodiment of this application. As shown in FIG. 7, the method may include the following steps.

Step 401: Obtain resource information.

The resource information is image data of a game APP, and is intended to display an image on an interface of the game APP. The resource information may include real frame image information and UI information.

The UI information is overall design information of human-machine interaction, operation logic, and interface aesthetics of software.

The real frame image information includes, but is not limited to, a real frame image, depth information of the real frame image, and pixel attribute information of the real frame image. The pixel attribute information is used to represent whether a pixel is a static pixel or a dynamic pixel.

The dynamic pixel is usually a pixel that changes due to influence of a factor such as a dynamic object, lighting, and a material in a scene, for example, a moving object, flickering light, or a changing texture. The static pixel usually includes a static scene element, such as a fixed terrain, a static building, or a fixed texture.

In some embodiments, a game frame interpolation scenario is used as an example. The game APP may send the resource information to a three-dimensional graphics processing library, and the three-dimensional image processing library renders an image of the game APP. In this way, an electronic device can capture the real frame image information obtained after the rendering processing.

Step 402: Create a first mesh layer of the real frame image.

In this embodiment of this application, the real frame image may be any one of two adjacent real frame images used for calculating a predicted frame image. For example, refer to FIG. 1. The real frame image may be a first real frame image, or may be a second real frame image.

Creating the first mesh layer of the real frame image may also be referred to as meshing the real frame image, to segment the real frame image into geometric figures for easier processing, such as polygons, triangles, or quadrilaterals.

The created first mesh layer is consistent with the real frame image in size, so that each figure filled in the first mesh layer can cover a pixel region of the real frame image.

For example, in this embodiment of this application, each mesh in the created first mesh layer is a quadrilateral mesh, that is, the real frame image is meshed according to a size of a quadrilateral. The quadrilateral may be a square.

In some embodiments, the first mesh layer may alternatively be normalized. If each mesh in the first mesh layer is a non-triangular mesh, such as a quadrilateral mesh, the non-triangular mesh may be normalized, so that each non-triangular mesh in the first mesh layer is divided into a plurality of triangles. This facilitates graphic calculation.

For example, if the created first mesh layer is a quadrilateral mesh, each quadrilateral in the quadrilateral mesh may be divided into two triangles again, to normalize the mesh.

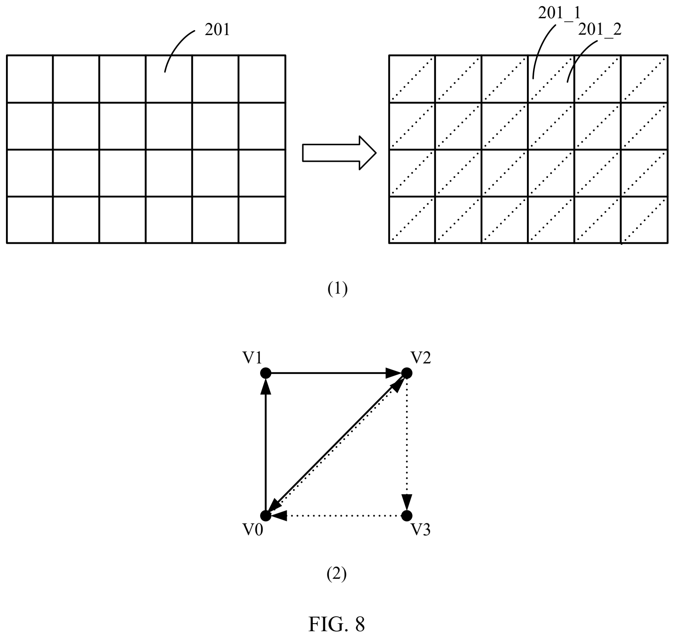

As shown in (1) in FIG. 8, each quadrilateral mesh 201 in the first mesh layer may be divided into a triangle 201_1 and a triangle 201_2. As shown in (2) in FIG. 8, a quadrilateral mesh Square (V0-V1-V2-V3) is used as an example. The quadrilateral mesh may be divided into a triangle mesh Tringle1 (V0-V1-V2) and a triangle mesh Tringle2 (V2-V3-V0).

It should be noted that the first mesh layer can cover each pixel in the real frame image. Each mesh in the first mesh layer corresponds to a pixel region (including a plurality of pixels) in the real frame image. A pixel region corresponding to each mesh may be a region with continuous depth values, may be a region with discontinuous depth values, may be a region whose pixels are all dynamic pixels, or may be a region including both a dynamic pixel and a static pixel. It may be learned based on the foregoing descriptions that the region with continuous depth values and the region including both a dynamic pixel and a static pixel are prone to distortion and deformation. Therefore, in this embodiment of this application, meshes prone to distortion and deformation may be identified first, and then mesh reconstruction processing is performed on these meshes, to respectively draw pixels having different attributes in a same mesh in meshes corresponding to different mesh layers, so that attributes of pixels in each mesh after mesh reconstruction processing are consistent. For example, after mesh reconstruction, depth levels of pixels in a same mesh are the same, and all pixels in the same mesh are static pixels or dynamic pixels. In this way, because corresponding pixels in each mesh are continuous, when image warping processing is performed on each mesh layer based on a motion vector corresponding to the mesh, continuous graphic information of each object in the real frame image can be better retained, to avoid a problem of distortion in an edge region of each object in the real frame image.

The following describes a specific implementation of the mesh reconstruction processing according to this embodiment of this application.

Step 403: Create at least one second mesh layer if the real frame image includes a reconstructed region satisfying a first preset condition and/or a second preset condition.

Step 404: Draw pixels of the reconstructed region at the first mesh layer and the at least one second mesh layer respectively based on a reconstruction attribute of the reconstructed region.

A problem of image deformation easily occurs in a static region with discontinuous depths and a region including both a dynamic pixel and a static pixel. Therefore, in this embodiment of this application, these regions prone to image deformation need to be identified, to perform mesh reconstruction processing on these regions prone to image deformation.

A mesh satisfying the first preset condition is a static region with discontinuous depths (that is, a mesh including static pixels having different depth levels), and a mesh satisfying the second preset condition is a mesh including both a static pixel and a dynamic pixel. In this embodiment of this application, a mesh satisfying the first preset condition and/or the second preset condition is referred to as a reconstructed region or a reconstructed mesh.

In this embodiment of this application, each mesh satisfying the first preset condition and/or the second preset condition is correspondingly one reconstructed region. A reconstructed region satisfying the first preset condition may be referred to as a static reconstructed region, and a reconstructed region satisfying the second preset condition may be referred to as a dynamic reconstructed region.

In some embodiments, determining whether the real frame image includes a static reconstructed region satisfying the first preset condition may be implemented in the following manner: first determining a depth threshold of a static pixel in the real frame image; and then, determining, based on the depth threshold, whether static pixels in each mesh including the static pixels are continuous, where if the static pixels are discontinuous, the mesh is the static reconstructed region.

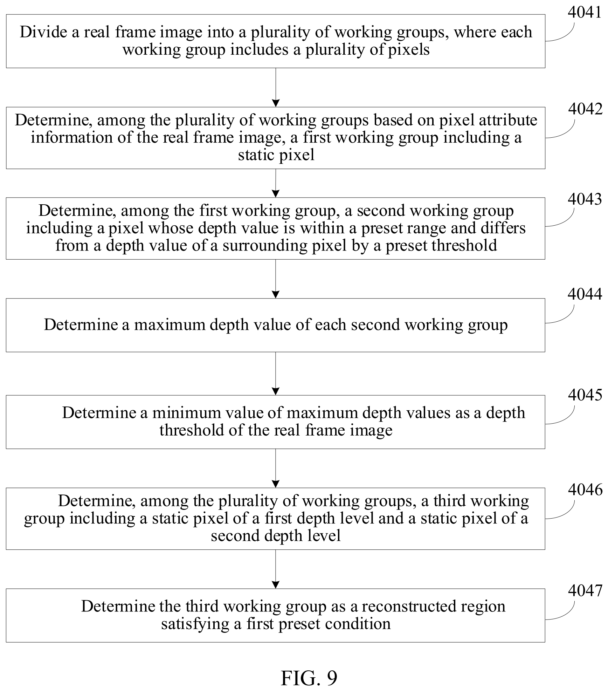

Specifically, As shown in FIG. 9, for a method for determining whether the real frame image includes the static reconstructed region satisfying the first preset condition, refer to descriptions of the following step 4041 to step 4047.

Step 4041: Divide the real frame image into a plurality of working groups, where each working group includes a plurality of pixels.

That is, the real frame image is a global working group, and each working group obtained through the division is a local working group. Each working group corresponds to a size of each mesh in the first mesh layer, and is a basic unit for performing image warping processing by the electronic device (refer to FIG. 2).

Step 4042: Determine, among the plurality of working groups based on the pixel attribute information of the real frame image, a first working group including a static pixel.

The electronic device may identify, based on the pixel attribute information, a working group, namely, the first working group, including a static pixel.

Step 4043: Determine, among the first working group based on the depth information of the real frame image, a second working group including a pixel whose depth value is within a preset range and differs from a depth value of a surrounding pixel by a preset threshold.

The preset depth range may be understood as a depth range of interest, and an edge of a static object in the depth range is easily distorted during image warping.

If a difference between a depth value of any pixel in the current first working group and that of a surrounding pixel exceeds the preset threshold, it indicates that depths of static pixels in the current working group are discontinuous. Otherwise, it indicates that depths of static pixels in the current working group are consistent. In this embodiment of this application, a working group in which a region with discontinuous depths exists in the depth range of interest among the first working group is determined as the second working group.

Step 4044: Determine a maximum depth value of each second working group.

Because the second work group is a region with discontinuous depths, in other words, the second work group includes static pixels having different depth values, the maximum depth value of the static pixels in each second work group may be determined.

Step 4045: Determine a minimum value of maximum depth values as a depth threshold of the real frame image.

Step 4046: Determine, among the plurality of working groups, a third working group including a static pixel of a first depth level and a static pixel of a second depth level.

In this embodiment of this application, a depth value of each static pixel may be compared with the depth threshold. If the depth value of the static pixel is greater than the depth threshold, the static pixel is a static pixel of the first depth level. For example, the first depth level is far. If the depth value of the static pixel is less than or equal to the depth threshold, the static pixel is a static pixel of the second depth level. For example, the first depth level is near. It can be learned that the first depth level and the second depth level belong to different depth levels, and a depth difference between the first depth level and the second depth level is large.

In this way, in this embodiment of this application, a depth level status of each working group can be determined based on the depth threshold. Depth levels of each working group may include the following several cases.

First case: The working group includes static pixels, and depth values of the static pixels are all greater than the depth threshold. In this case, all the static pixels in the working group belong to static pixels of the first depth level, that is, the working group is a working group of a single depth level.

Second case: The working group includes static pixels, and depth values of the static pixels are all less than or equal to the depth threshold. In this case, all the static pixels in the working group belong to static pixels of the second depth level, that is, the working group is a working group of a single depth level.

Third case: The working group includes static pixels, depth values of some static pixels are greater than the depth threshold, and depth values of some static pixels are less than or equal to the depth threshold. In this case, the working group includes both the static pixels of the first depth level and the static pixels of the second depth level, that is, the working group is a working group with discontinuous depth levels.

Fourth case: The working group does not include a static pixel, but includes only a dynamic pixel.

It can be learned that, in the foregoing four cases, only the working group satisfying the third case belongs to a static region with discontinuous depths. Such static region with discontinuous depths is prone to image deformation.

In this way, in this embodiment of this application, the working group satisfying the foregoing third case is referred to as the third working group.

Step 4047: Determine the third working group as the reconstructed region satisfying the first preset condition.

In this embodiment of this application, the third working group is the working group satisfying the foregoing third case, that is, a working group including static pixels having different depth levels. That is, the third working group is the static reconstructed region satisfying the first preset condition. Each third working group corresponds to one static reconstructed region.

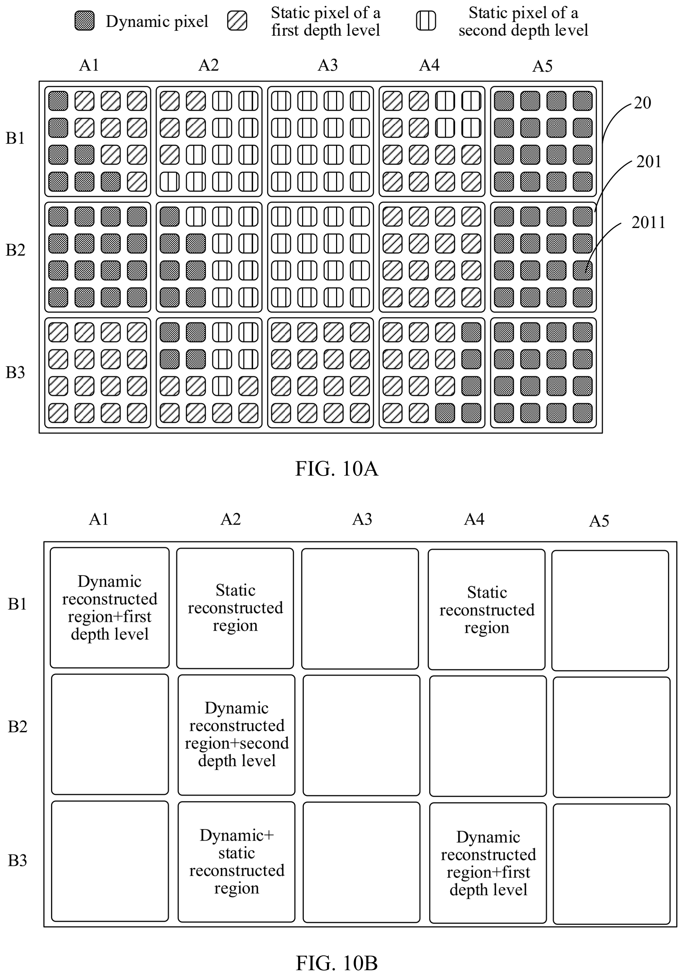

For example, as shown in FIG. 10A, a real image frame 20 is divided into a plurality of quadrilateral meshes 201, each quadrilateral mesh 201 corresponds to one working group, and each working group includes a plurality of pixels 2011. In this way, after processing in step 4031 to step 4037, a pixel depth level status of each working group can be determined. For example, a working group A1-B1, a working group A1-B3, a working group A3-B3, a working group A4-B2, and a working group A4-B3 all belong to the foregoing first case, that is, the foregoing working groups are of a single depth level, and depth levels of the working groups are the first depth level. A working group A2-B2, a working group A3-B1, and a working group A3-B2 all belong to the foregoing second case, that is, the foregoing working groups are of a single depth level, and depth levels of the working groups are the second depth level. A working group A2-B1, a working group A2-B3, and a working group A4-B1 all belong to the foregoing third case, that is, the foregoing working groups are working groups with discontinuous depth levels. A working group A1-B2, a working group A5-B1, a working group A5-B2, and a working group A5-B3 all belong to the foregoing fourth case, that is, none of the foregoing working groups includes a static pixel. In this way, it can be determined that the working group A2-B1, the working group A2-B3, and the working group A4-B1 are static reconstructed regions satisfying the first preset condition.

It can be learned that, in the foregoing embodiment, the static reconstructed region in the real frame image can be determined based on the depth information of the real frame image and the pixel attribute information of the real frame image.

In some embodiments, determining whether the real frame image includes a dynamic reconstructed region satisfying the second preset condition may be implemented in the following manner: determining a status of a dynamic pixel and a static pixel in each working group based on the pixel attribute information of the real frame image; and then, determining a working group including the static pixel and the dynamic pixel as the dynamic reconstructed region.

For example, still refer to FIG. 10A. The status of a dynamic pixel and a static pixel in each working group may include the following several cases.

First case: The working group includes only dynamic pixels, for example, the working group A1-B2, the working group A5-B1, the working group A5-B2, and the working group A5-B3 in FIG. 10A.

Second case: The working group includes only static pixels, for example, the working group A1-B3, the working group A2-B1, and the working group A3-B1 in FIG. 10A.

Third case: The working group includes both a dynamic pixel and a static pixel, for example, the working group A1-B1, the working group A2-B2, the working group A2-B3, and the working group A4-B3 in FIG. 10A.

It can be learned that, in the foregoing three cases, only the working group corresponding to the third case is the dynamic reconstructed region satisfying the second preset condition. In this way, in this embodiment of this application, the working group satisfying the third case is determined as the dynamic reconstructed region.

It should be noted that a same working group may satisfy both the first preset condition and the second preset condition. For example, the working group A2-B3 in FIG. 10A include both static pixels and dynamic pixels, and the static pixels in the working group also include both a static pixel of the first depth level and a static pixel of the second depth level. In this case, the working group A2-B3 is a reconstructed region satisfying both the first preset condition and the second preset condition, that is, a static+dynamic reconstructed region.

It can be learned that, in this embodiment of this application, working groups corresponding to the real frame image may be divided into a non-reconstructed region and a reconstructed region. The non-reconstructed region refers to a region that does not require mesh reconstruction, for example, a mesh including only dynamic pixels, or a static pixel including only static pixels of a single depth level. The reconstructed region refers to a region that requires mesh reconstruction, and the reconstructed region is further divided into a static reconstructed region, a dynamic reconstructed region, and a static+dynamic reconstructed region.

In this way, a reconstruction attribute of each reconstructed region, that is, a depth level and a pixel attribute of a pixel included in each reconstructed region, can be determined.

In some embodiments, each reconstructed region may be calculated by using a compute shader.

In some embodiments, whether each working group is a reconstructed region, and reconstruction attribute information such as a depth level and a pixel attribute of each reconstructed region may be further marked.

For example, FIG. 10B is a marked map corresponding to FIG. 10A. As shown in FIG. 10B, corresponding reconstruction attribute information, for example, information such as a reconstruction type and a depth level, may be marked for a reconstructed region. For example, the reconstructed region A1-B1 may be marked as dynamic reconstructed region+first depth level, the reconstructed region A2-B1 is marked as a static reconstructed region, the reconstructed region A2-B2 is marked as dynamic reconstructed region+second depth level, the reconstructed region A2-B3 is marked as a dynamic+static reconstructed region, the reconstructed region A4-B1 is marked as a static reconstructed region, and the reconstructed region A4-B3 is marked as dynamic reconstructed region+first depth level. A working group that do not satisfy the first preset condition or the second preset condition may not be marked, that is, a corresponding region may be blank.

In this embodiment of this application, if the real frame image includes a reconstructed region, at least one second mesh layer is created. Then, pixels of the reconstructed region are drawn at the first mesh layer and the at least one second mesh layer respectively based on a reconstruction attribute of the reconstructed region. In this way, pixels having different reconstruction attributes in each reconstructed region can be respectively drawn at different mesh layers, to ensure that a pixel region in each mesh after drawing is a pixel region with continuous depths.

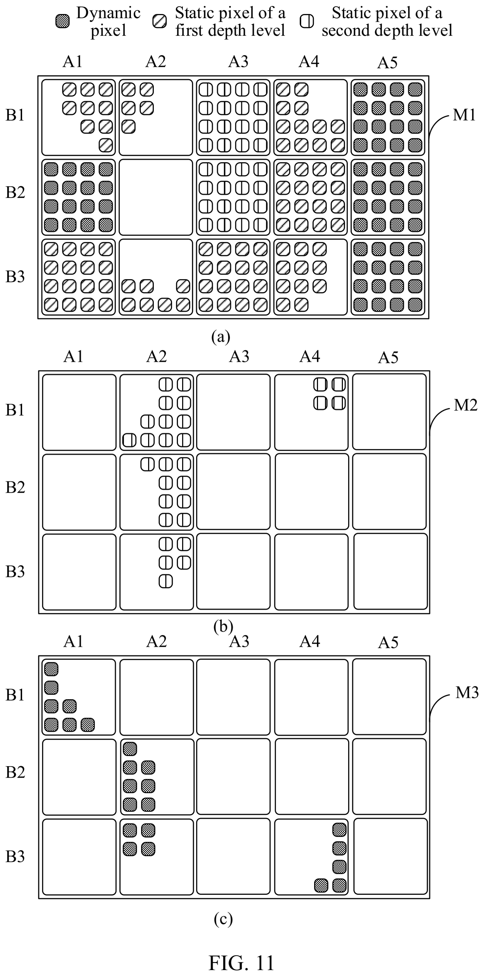

For example, performing mesh reconstruction processing on the real frame image shown in FIG. 10A is used as an example. After it is determined that the real frame image includes a reconstructed region satisfying the first preset condition and the second preset condition, it may be determined that two second mesh layers are created. As shown in FIG. 11, (a) in FIG. 11 is a first mesh layer M1, (b) in FIG. 11 is a second mesh layer M2, and (c) in FIG. 11 is a second mesh layer M3.

After the second mesh layer M2 and the second mesh layer M3 are created, it may be first determined that a pixel having which reconstruction attribute is to be drawn at each mesh layer in the reconstructed region. For example, it may be determined that the first mesh layer M1 is used for drawing a static pixel of the first depth level in the reconstructed region, the second mesh layer M2 is used for drawing a static pixel of the second depth level in the reconstructed region, and the second mesh layer M3 is used for drawing a dynamic pixel in the reconstructed region.

In this way, a pixel that needs to be drawn at each mesh layer can be determined based on a reconstruction attribute of each reconstructed region. Specifically, a pixel drawn at each mesh layer may be determined based on a reconstruction attribute of each reconstructed region in the marked map shown in FIG. 10B.

For example, as shown in FIG. 10B and FIG. 11, for a reconstructed region whose reconstruction attribute is dynamic reconstruction+first depth level, a static pixel of the first depth level in the reconstructed region may be retained at the first mesh layer M1, and a dynamic pixel in the reconstructed region is drawn in a mesh corresponding to the second mesh layer M3. For a reconstructed region whose reconstruction attribute is static reconstruction, a static pixel of the first depth level in the reconstructed region may be retained at the first mesh layer M1, and a static pixel of the second depth level in the reconstructed region is drawn in a mesh corresponding to the second mesh layer M2. For a reconstructed region whose reconstruction attribute is dynamic+static reconstruction, a static pixel of the first depth level in the reconstructed region may be retained at the first mesh layer M1, a static pixel of the second depth level in the reconstructed region is drawn in a mesh corresponding to the second mesh layer M2, and a dynamic pixel in the reconstructed region is drawn in a mesh corresponding to the second mesh layer M3.

As shown in (a) in FIG. 11, the first mesh layer M1 created in this embodiment of this application may include all pixels in a real frame. Therefore, a pixel of the first depth level in each reconstructed region may be retained at the first mesh layer M1, and a pixel of the second depth level and a dynamic pixel in each reconstructed region are removed. With reference to FIG. 10B and (a) in FIG. 11, reconstructed regions including static pixels of the first depth level are the reconstructed region A1-B1, the reconstructed region A2-B2, the reconstructed region A2-B3, the reconstructed region A4-B1, and the reconstructed region A4-B3. In this way, a static pixel of the first depth level in each reconstructed region is retained at the first mesh layer M1, and a static pixel of the second depth level and a dynamic pixel in each reconstructed region are removed. For a reconstructed region (for example, the reconstructed region A2-B2) that does not include a static pixel of the first depth level, any pixel in the reconstructed region is not retained at, that is, all pixels are removed from, the first mesh layer M1.

Because pixels in each non-reconstructed region at the first mesh layer M1 are continuous, there is no need to process the non-reconstructed region at the first mesh layer M1, to be specific, each pixel in the non-reconstructed region at the first mesh layer M1 is retained, and each pixel in the non-reconstructed region does not need to be drawn at another second mesh layer.

As shown in (b) in FIG. 11, the second mesh layer M2 is used for drawing a static pixel of the second depth level in each reconstructed region. With reference to FIG. 10B and (b) in FIG. 11, reconstructed regions including static pixels of the second depth level are the reconstructed region A2-B1, the reconstructed region A2-B2, the reconstructed region A2-B3, and the reconstructed region A4-B1. In this way, a corresponding static pixel of the second depth level is drawn in a mesh corresponding to each reconstructed region at the second mesh layer M2. For example, a static pixel of the second depth level in the reconstructed region A2-B1 is drawn in a mesh A2-B1 of the second mesh layer M2. Similarly, static pixels of the second depth level in the reconstructed region A2-B2, the reconstructed region A2-B3, and the reconstructed region A4-B1 are respectively drawn in a mesh A2-B2, a mesh A2-B3, and a mesh A4-B1 of the second mesh layer M2. It can be learned that the second mesh layer M2 includes only a static pixel of the second depth level in each reconstructed region.

As shown in (c) in FIG. 11, the second mesh layer M3 is used for drawing a dynamic pixel in each reconstructed region. With reference to FIG. 10B and (c) in FIG. 11, reconstructed regions including dynamic pixels are the reconstructed region A1-B1, the reconstructed region A2-B2, the reconstructed region A2-B3, and the reconstructed region A4-B3. In this way, a corresponding dynamic pixel is drawn in a mesh corresponding to each reconstructed region at the second mesh layer M3. For example, a dynamic pixel in the reconstructed region A1-B1 is drawn in a mesh A1-B1 of the second mesh layer M3. Similarly, dynamic pixels in the reconstructed region A2-B2, the reconstructed region A2-B3, and the reconstructed region A4-B3 are drawn in the mesh A2-B2, the mesh A2-B3, and a mesh A4-B3 of the second mesh layer M3 respectively. It can be learned that the second mesh layer M3 includes only a dynamic pixel in each reconstructed region.

In conclusion, it can be learned that, for the static reconstructed region satisfying the first preset condition, secondary reconstruction needs to be performed on the static reconstructed region. To be specific, pixels of different depth levels in the static reconstructed region are respectively drawn at the first mesh layer M1 and the second mesh layer M2. For the dynamic reconstructed region satisfying the second preset condition, secondary reconstruction also needs to be performed on the dynamic reconstructed region. To be specific, a static pixel in the dynamic reconstructed region is drawn at the first mesh layer M1 or the second mesh layer M2, and a dynamic pixel in the dynamic reconstructed region is drawn at the second mesh layer M3. For the reconstructed region satisfying both the first preset condition and the second preset condition, tertiary reconstruction needs to be performed on the reconstructed region. To be specific, static pixels of different depth levels in the reconstructed region are drawn at the first mesh layer M1 and the second mesh layer M2, and a dynamic pixel in the reconstructed region is drawn at the second mesh layer M3.

As shown in FIG. 11, after the foregoing mesh reconstruction processing, one image is obtained at each of the first mesh layer M1, the second mesh layer M2, and the second mesh layer M3 (where in this embodiment of this application, an image obtained at the first mesh layer may be referred to as a first image, and an image obtained at the second mesh layer may be referred to as a second image). The first image and each second image are local images in the real frame image. For example, compared with the complete real frame image, a first image obtained at the first mesh layer M1 does not include a static pixel of the second depth level and a dynamic pixel in a reconstructed region, a second image obtained at the second mesh layer M2 only includes a static pixel of the second depth level in a reconstructed region, and a second image obtained at the second mesh layer M3 only includes a dynamic pixel in a reconstructed region.

It should be noted that meshes in the first mesh layer M1, the second mesh layer M2, and the third mesh layer M3 are in one-to-one correspondence. In this way, after the image obtained at the first mesh layer M1, the image obtained at the second mesh layer M2, and the image obtained at the third mesh layer M3 are superimposed, the complete real frame image can be obtained.

It should be further noted that, in the foregoing embodiment, only two second mesh layers are created for example descriptions, and this does not indicate a limitation on a quantity of created second mesh layers. The quantity of created second mesh layers may be determined based on a reconstruction attribute.

In some embodiments, if the real frame image includes only a reconstructed region satisfying the first preset condition (that is, includes only a static reconstructed region), one second mesh layer may be created. In this way, for the reconstructed region, pixels having different reconstruction attributes can be drawn at the first mesh layer and the second mesh layer respectively. For example, a static pixel of the first depth level in the reconstructed region may be drawn at the first mesh layer; and a static pixel of the second depth level in the reconstructed region is drawn at the second mesh layer.

In some embodiments, if the real frame image includes only a reconstructed region satisfying the second preset condition (that is, includes only a dynamic reconstructed region), and depth levels of static pixels of each reconstructed regions are the same, one second mesh layer may be created. In this way, a static pixel in the reconstructed region may be drawn at the first mesh layer, and a dynamic pixel in the reconstructed region may be drawn at the second mesh layer. Alternatively, a dynamic pixel in the reconstructed region is drawn at the first mesh layer, and a static pixel in the reconstructed region is drawn at the second mesh layer.

In some embodiments, if the real frame image only includes a reconstructed region satisfying the second preset condition (that is, only includes a dynamic reconstructed region), and depth levels of static pixels of each reconstructed region are different, two second mesh layers may be created. In this way, a static pixel of the first depth level in the reconstructed region can be drawn at the first mesh layer, a static pixel of the second depth level in the reconstructed region can be drawn at a 1^{st} second mesh layer, and a dynamic pixel in the reconstructed region can be drawn at a 2^{nd} second mesh layer. Alternatively, a dynamic pixel in the reconstructed region is drawn at the first mesh layer, a static pixel of the first depth level in the reconstructed region is drawn at a 1^{st} second mesh layer, and a static pixel of the second depth level in the reconstructed region is drawn at a 2^{nd} second mesh layer; or a static pixel of the first depth level in the reconstructed region is drawn at the first mesh layer, a dynamic pixel in the reconstructed region is drawn at a 1^{st} second mesh layer, and a static pixel of the second depth level in the reconstructed region is drawn at a 2^{nd} second mesh layer.

In some embodiments, if the real frame image includes a reconstructed region satisfying the first preset condition and the second preset condition (that is, includes a dynamic+static reconstructed region), two second mesh layers may be created. In this way, a static pixel of the first depth level in the reconstructed region can be drawn at the first mesh layer, a static pixel of the second depth level in the reconstructed region can be drawn at a 1^{st} second mesh layer, and a dynamic pixel in the reconstructed region can be drawn at a 2^{nd} second mesh layer. Alternatively, a dynamic pixel in the reconstructed region is drawn at the first mesh layer, a static pixel of the first depth level in the reconstructed region is drawn at a 1^{st} second mesh layer, and a static pixel of the second depth level in the reconstructed region is drawn at a 2^{nd} second mesh layer; or a static pixel of the first depth level in the reconstructed region is drawn at the first mesh layer, a dynamic pixel in the reconstructed region is drawn at a 1^{st} second mesh layer, and a static pixel of the second depth level in the reconstructed region is drawn at a 2^{nd} second mesh layer.

In the foregoing different embodiments, for a method for drawing different pixels at different mesh layers based on different reconstruction attributes, refer to the descriptions of FIG. 11. Details are not described herein again.

In this way, pixels having different reconstruction attributes in each reconstructed region are respectively drawn at different mesh layers, so that a pixel region in each mesh in each mesh layer is a pixel region with continuous depths. For example, each reconstructed region of the first mesh layer M1 shown in (a) in FIG. 11 includes only a static pixel of the first depth level or does not include a pixel, each non-reconstructed region of the first mesh layer M1 includes only a dynamic pixel or only a static pixel, and depth levels of all static pixels in a same non-reconstructed region are the same. That is, a pixel region in each mesh in the first mesh layer is a continuous pixel region. The second mesh layer M2 shown in (b) in FIG. 11 includes only a static pixel of the second depth level. In this case, a pixel region in each mesh in the second mesh layer M2 is also a continuous pixel region. Similarly, the second mesh layer M3 shown in (c) of FIG. 11 includes only a dynamic pixel. In this case, a pixel region in each mesh in the second mesh layer M3 is also a continuous pixel region.

Step 405: Obtain a first motion vector corresponding to the first image and a second motion vector corresponding to each second image.

The resource information obtained in step 401 may include two adjacent real frame images. In this way, a motion vector corresponding to the real frame image is obtained through calculation based on the two adjacent real frame images.

It should be understood that the motion vector corresponding to the real frame image includes a motion vector of each region in the real frame image. In this embodiment of this application, the real frame image is disassembled to different mesh layers in a mesh reconstruction manner. Therefore, a motion vector of a real frame image region corresponding to each mesh layer can be obtained based on the motion vector corresponding to the real frame image. To be specific, the first motion vector corresponding to the first image at the first mesh layer and a second motion vector corresponding to a second image at each second mesh layer are obtained.

The first image corresponds to a plurality of meshes in the first mesh layer. In this case, the first motion vector includes motion vectors corresponding to the plurality of meshes in the first mesh layer. Similarly, the second image corresponds to a plurality of meshes in the second mesh layer. In this case, the second motion vector includes motion vectors corresponding to the plurality of meshes in the second mesh layer. Specifically, motion vectors of four vertexes of each mesh may be used to represent a motion vector corresponding to an image in the mesh. In this embodiment of this application, after mesh reconstruction processing, all pixel regions in each mesh are pixel regions with consistent depths. Therefore, motion vectors corresponding to meshes in each mesh layer are basically the same.

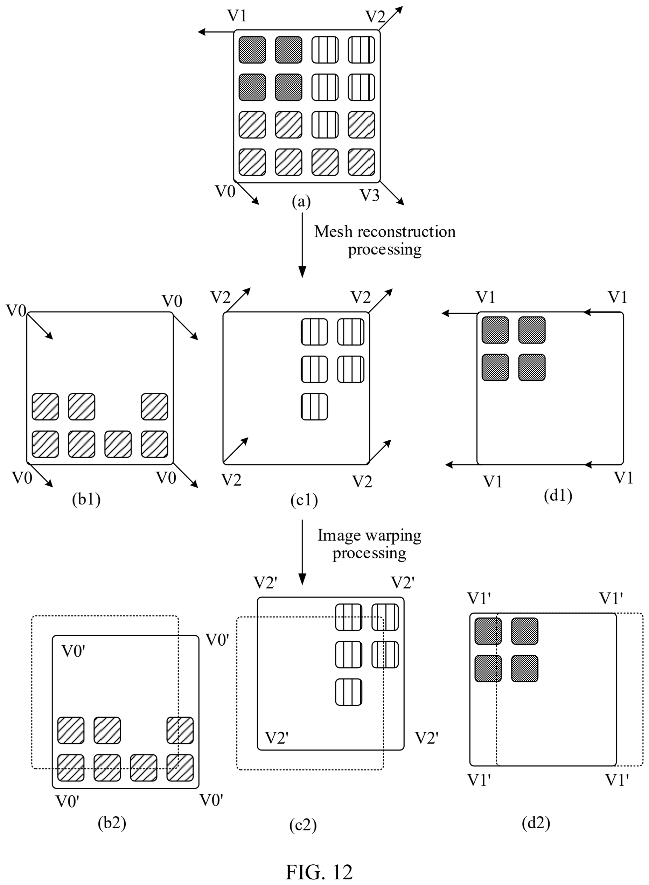

For example, motion vectors of the reconstructed region A2-B3 in FIG. 10A are used as an example. As shown in (a) in FIG. 12, the reconstructed region A2-B3 includes pixels having three reconstruction attributes, and motion vectors of four vertexes of the reconstructed region A2-B3 are respectively V0, V1, V2, and V3. The motion vectors V0 and V3 are the same, the motion vectors V0 and V3 represent motion vectors of static pixels of the first depth level in the reconstructed region A2-B3, the motion vector V1 represents a motion vector of a dynamic pixel in the reconstructed region A2-B3, and the motion vector V2 represents a motion vector of a static pixel of the second depth level in the reconstructed region A2-B3.

It can be learned that a difference between motion vectors corresponding to static pixel regions of different depth levels in the real frame image is large, and a difference between motion vectors corresponding to a static pixel region and a dynamic pixel region is also large.

In this embodiment of this application, after mesh reconstruction processing, all pixel regions in each mesh are pixel regions with consistent depths. Therefore, motion vectors of four vertexes of each mesh after the processing are basically the same. As shown in (b1) in FIG. 12, a mesh (V0-V0-V0-V0) is a reconstructed mesh corresponding to the reconstructed region A2-B3 in the first mesh layer M1, and the reconstructed mesh includes only a static pixel of the first depth level. Therefore, a motion vector corresponding to the reconstructed mesh is a motion vector corresponding to the static pixel of the first depth level in the reconstructed mesh. In this case, motion vectors of four vertexes of the reconstructed mesh are all the motion vector V0. Similarly, as shown in (c1) in FIG. 12, a mesh (V2-V2-V2-V2) is a reconstructed mesh corresponding to the reconstructed region A2-B3 in the second mesh layer M2, and the reconstructed mesh includes only a static pixel of the second depth level. Therefore, a motion vector corresponding to the reconstructed mesh is a motion vector corresponding to the static pixel of the second depth level in the reconstructed mesh. In this case, motion vectors of four vertexes of the reconstructed mesh are all the motion vector V2. Similarly, as shown in (d1) in FIG. 12, a mesh (V1-V1-V1-V1) is a reconstructed mesh corresponding to the reconstructed region A2-B3 in the second mesh layer M3, and the reconstructed mesh includes only a dynamic pixel. Therefore, a motion vector corresponding to the reconstructed mesh is a motion vector corresponding to the dynamic pixel in the reconstructed mesh. In this case, motion vectors of four vertexes of the reconstructed mesh are all the motion vector V0 or the motion vector V3.

It should be understood that, in this embodiment of this application, a motion vector corresponding to each mesh in each mesh layer may be obtained based on a depth level or a pixel attribute of a pixel in the mesh, and motion vectors of four vertexes of each mesh are basically the same. Descriptions are provided above by using an example of a motion vector of a corresponding mesh in each mesh layer of the reconstructed region A2-B3. For a motion vector of another mesh, refer to the descriptions in this example. Details are not described herein again.

In this embodiment of this application, based on a pixel attribute (such as a static object and a dynamic object) and depth information corresponding to each image region in the real frame image, a matched calculation manner is selected to calculate a motion vector corresponding to each image region, to obtain a motion vector corresponding to the real frame image.

In an optional implementation, some objects (for example, a person) in the image have dynamic object (for example, an object in a moving state) attributes, and some objects (for example, a sky or a column) in the image are static objects.

For example, for an image region corresponding to a static object, a corresponding motion vector may be calculated by using a reprojection method. For an image region corresponding to a dynamic object, a corresponding motion vector may be calculated by using an optical flow method. For steps of a method for calculating the motion vectors by using the reprojection method and the optical flow method, refer to a conventional technology. Details are not described herein again.

Step 406: Perform image warping processing on the first image in the first mesh layer based on the first motion vector to generate a first warped image.

Step 407: Perform image warping processing on each first image in each second mesh layer based on each second motion vector to generate at least one second warped image.

When the image warping processing is performed on the first image in the first mesh layer, each vertex of each mesh (also referred to as a first mesh) corresponding to the first image may be moved to a corresponding position based on a motion vector corresponding to the vertex, to obtain the first warped image after the image warping.

Similarly, when the image warping processing is performed on the second image in the second mesh layer, each vertex of each mesh (also referred to as a second mesh) corresponding to the second image may be moved to a corresponding position based on a motion vector corresponding to the vertex, to obtain the second warped image after the image warping.

It should be noted that performing image warping processing on an image based on a motion vector means moving a position of a vertex of each mesh based on a motion vector corresponding to the vertex of the mesh. Regardless of the first mesh layer or the second mesh layer, processing manners for moving a static object or moving a dynamic object are consistent, and a difference only lies in that the processing manners are implemented at different mesh layers based on different motion vectors.

For example, as shown in FIG. 12, in (b2), (c2), and (d2) in FIG. 12, dotted meshes are positions before movement, and solid meshes are positions after movement. As shown in (b1) and (b2) in FIG. 12, when image warping processing is performed on the mesh (V0-V0-V0-V0) in the first mesh layer M1, motion vectors of four vertexes of the mesh (V0-V0-V0-V0) are all V0. Therefore, each vertex is moved to a corresponding position based on the motion vector V0 corresponding to the vertex, to obtain a mesh (V0'-V0'-V0'-V0'). Similarly, as shown in (c1) and (c2) in FIG. 12, when image warping processing is performed on the mesh (V2-V2-V2-V2) in the second mesh layer M2, motion vectors of four vertexes of the mesh (V2-V2-V2-V2) are all V2. Therefore, each vertex is moved to a corresponding position based on the motion vector V2 corresponding to the vertex, to obtain a mesh (V2'-V2'-V2'-V2'). As shown in (dl) and (d2) in FIG. 12, when image warping processing is performed on the mesh (V1-V1-V1-V1) in the second mesh layer M3, motion vectors of four vertexes of the mesh (V1-V1-V1-V1) are all V1. Therefore, each vertex is moved to a corresponding position based on the motion vector V1 corresponding to the vertex, to obtain a mesh (V1'-V1'-V1'-V1').

In some embodiments, if a mesh layer is a mesh on which mesh normalization processing is performed (that is, each mesh is divided into two triangles, and refer to FIG. 8 for details), each vertex of each triangle may be moved to a corresponding position based on a motion vector corresponding to the vertex, to obtain the first warped image and each second warped image after the image warping.

Because all pixel regions in each mesh in this embodiment of this application are continuous, motion vectors of vertexes of each mesh or triangle are basically the same. In this way, when image warping processing is performed on each mesh or triangle based on a motion vector, the mesh or triangle is not severely deformed, so that image continuity can be ensured and a distortion problem can be avoided.

In addition, for each mesh (or triangle), depth information of the mesh may be set based on a depth value of a vertex of the mesh. For example, interpolation processing is performed based on a depth value of each vertex of the mesh, to obtain a depth value of each pixel in the mesh as the depth information of the mesh.

In this way, when one mesh is moved based on a motion vector at each mesh layer, a coverage relationship between the mesh and another mesh in the mesh layer can be determined based on depth information of the mesh. For example, when the first mesh is moved based on a motion vector at the first mesh layer, and when each first mesh is moved to a target position, a coverage relationship between the first mesh and another first mesh at the target position is determined based on depth information of the first mesh and depth information of the another first mesh at the target position. For another example, when the second mesh is moved based on a motion vector at the second mesh layer, and when each second mesh is moved to a target position, a coverage relationship between the second mesh and another second mesh at the target position is determined based on depth information of the second mesh and depth information of the another second mesh at the target position.

Therefore, a mesh (or triangle) is moved at each mesh layer with reference to pixel depth information. This can ensure correct depth ordering between different objects at each mesh layer.

Step 408: Perform superimposition processing on the first warped image and the at least one second warped image to generate a predicted frame image.

When the superimposition processing is performed on the first warped image and the at least one second warped image, mesh layers may be aligned and then superimposed, to ensure correctness of a position of each object in the predicted frame image obtained through the superimposition.

For example, as shown in FIG. 11 and FIG. 12, because the first mesh layer M1, the second mesh layer M2, and the second mesh layer M3 are the same in size, during superimposition processing, outer edges of the first mesh layer M1, the second mesh layer M2, and the second mesh layer M3 may be aligned. In this way, images belonging to a same mesh in each mesh layer can be superimposed (for example, (b2), (c2), and (d2) in FIG. 12 are superimposed), to obtain a complete and continuous image.

When the superimposition processing is performed on the first warped image and the at least one second warped image, a coverage relationship between the first mesh in the first mesh layer and the second mesh in each second mesh layer may be further determined based on depth information of each first mesh and depth information of each second mesh, to ensure correct depth ordering between different objects after the superimposition.

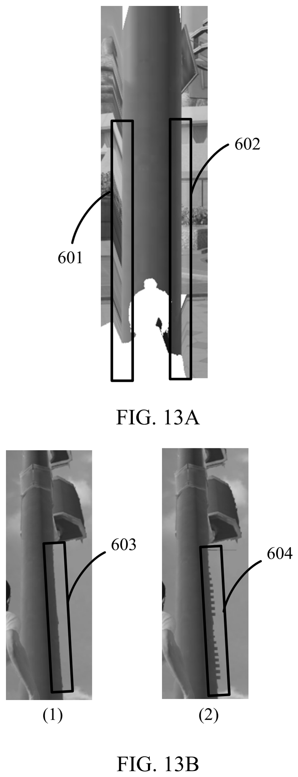

FIG. 13A shows an example of a predicted frame image. In the predicted frame image shown in FIG. 13A, image warping processing is performed on a region 601 by using a solution of the conventional technology, and image warping processing is performed on a region 602 by using a solution provided in this embodiment. The region 601 and the region 602 are only regions with discontinuous depth information of a static object. It may be learned from comparison between the region 601 and the region 602 that an image of the region 601 is distorted, and in particular, an edge region of the static object is severely deformed. A picture effect of the region 602 is better, an edge region of the static object is clear, and the edge region of the static object is not deformed.

FIG. 13B is a diagram of an example of comparison between predicted frame images. A predicted frame image shown in (1) in FIG. 13B is generated through image warping by using the solution provided in this embodiment. A predicted frame image shown in (2) in FIG. 13B is generated through image warping processing by using the technical solution of the conventional technology. A region 603 in (1) in FIG. 13B and a region 604 in (2) in FIG. 13B are a same image region, and both are regions with discontinuous depth information of a static object. It may be learned from comparison between (1) and (2) in FIG. 13B that an image of the region 604 is distorted, and in particular, an edge region of the static object is severely deformed. A picture effect of the region 603 is better, an edge region of the static object is clear, and the edge region of the static object is not deformed.

In this way, according to the image processing method provided in this embodiment of this application, regardless of how complex a geometric edge of a discontinuous image region (for example, human hair or a tree leaf in the real frame image), the discontinuous image region can be identified in the foregoing mesh reconstruction manner, and pixels having different reconstruction attributes in the discontinuous image region are respectively drawn at different mesh layers, to ensure that a pixel region in each mesh is a continuous pixel region. Therefore, when image warping processing is performed on a continuous pixel region in each mesh based on a corresponding motion vector, the mesh is not severely deformed, thereby ensuring image continuity. It can be learned that the image processing method provided in this embodiment of this application can resolve a problem of distortion of a discontinuous image region having a complex geometric edge, and improve game experience of a user.

It should be noted that the foregoing embodiment merely uses a solution of creating two second mesh layers if the real frame image includes the reconstructed region satisfying both the first preset condition and the second preset condition as an example for descriptions, and does not represent a limitation on the image processing method provided in this embodiment of this application.

In some embodiments, if the real frame image includes the reconstructed region satisfying both the first preset condition and the second preset condition, one second mesh layer may alternatively be created. In this case, a dynamic pixel and a static pixel of the first depth level in the real frame image may be retained at the first mesh layer, and then a static pixel of the second depth level in the reconstructed region is drawn at the second mesh layer. In this way, when image warping processing is performed on the first mesh layer, the image warping processing may be first performed on the first mesh layer based on a motion vector of the static pixel of the first depth level in the first mesh layer. Then, the image warping processing is performed on the first mesh layer based on a motion vector of the dynamic pixel in the first mesh layer. A method for performing image warping processing on the second mesh layer is the same as that in the foregoing embodiment, and details are not described herein again. In this way, this solution can also resolve a problem of distortion of an image region with discontinuous depth values having a complex geometric edge.

It should be further noted that, after operations in an image warping phase and operations in a superimposition processing phase are completed, related operations in a rasterization phase and a pixel processing phase may continue to be completed, to generate the predicted frame image. For details of a procedure of generating the predicted frame image in this embodiment, refer to the conventional technology. Details are not described herein again.

Because objects in a raw video move at different speeds, image information overlapping and image information missing may occur in the predicted frame image calculated by the electronic device based on a motion vector. That is, the obtained predicted frame image is a predicted frame image in which an image is to be completed.

Therefore, image completion needs to be performed on the obtained predicted frame image, to obtain a completed predicted frame image.

Further, the completed predicted frame image and the UI information may be fused, to obtain a target predicted frame image, and the target predicted frame image is sent for displaying.

In this way, after completion processing is completed on the predicted frame image, the completed predicted frame image and the UI information are fused, to obtain a target predicted frame, and further, the target predicted frame may be output to a display screen of the electronic device for displaying.

It should be noted that the foregoing procedure is described by using only one predicted frame as an example. A procedure of processing each predicted frame is similar to the foregoing procedure, and details are not described again. A display order of the target predicted frame is related to a frame interpolation manner of the predicted frame. For this, refer to the conventional technology. Details are not described herein. For details of this procedure, refer to the conventional technology. Details are not described herein again.

On a mobile platform, a game with a high refresh rate tends to be overheating or lagging due to limitations of power consumption or CPU and GPU capabilities. This affects user experience. To enhance game smoothness experience, a game developer often reduces an original refresh rate, and then generates a predicted frame in image space, to halve rendering at a same frame rate, greatly reduce power consumption of a smart terminal, and reduce heat generation of the smart terminal.

The image processing method provided in this embodiment of this application can better resolve image distortion in the predicted frame image, especially deformation in a complex geometric edge with discontinuous depth information, to improve picture quality of the predicted frame image. In this way, when a quantity of rendered frames is halved, smoothness of the game can be ensured to remain unchanged, power consumption of the smart terminal is reduced, and heat generation of the smart terminal is reduced, to improve user experience.

In another frame interpolation application scenario, if there is a region with discontinuous depth information (or a large depth difference) in an image, image warping processing may also be performed according to the image processing method provided in this embodiment of this application, to improve picture quality of the predicted frame image. Details are not described herein again.

The method embodiments described in this specification may each be an independent solution, or may be combined based on internal logic, and such solutions all fall within the protection scope of this application.

The image processing method provided in this application is described in the foregoing embodiments. It may be understood that to implement the foregoing functions, an image processing apparatus includes corresponding hardware structures and/or software modules for performing the functions. It should be readily appreciated by a person skilled in the art that the example units, algorithms, and steps described with reference to embodiments disclosed in this specification can be implemented in this application by hardware or a combination of hardware and computer software. Whether a function is performed by hardware or hardware driven by computer software depends on particular applications and design constraints of the technical solutions. A person skilled in the art may use different methods to implement the described functions for each particular application, but this implementation should not be considered as going beyond the scope of this application.

In embodiments of this application, the image processing apparatus may be divided into functional modules based on the foregoing method examples. For example, each functional module may correspond to one functional module through division, or two or more functions may be integrated into one processing module. The integrated module may be implemented in the form of hardware, or may be implemented in a form of a software functional module. It should be noted that, in embodiments of this application, the division of the modules is an example, and is merely logical function division. In an actual implementations, other division manners may be used.

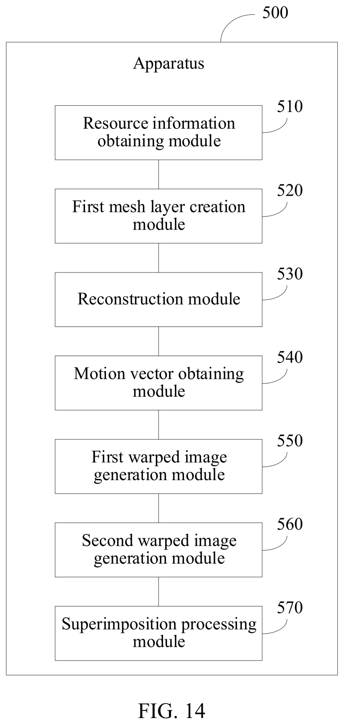

The method provided in embodiments of this application has been described in detail above with reference to FIG. 1 to FIG. 13B. The apparatus provided in embodiments of this application will be described in detail below with reference to FIG. 14. It should be understood that the descriptions of the apparatus embodiment correspond to the descriptions of the method embodiments. Therefore, for content that are not described in detail in the apparatus embodiment, refer to the foregoing method embodiments. For brevity, details are not described herein again.

FIG. 14 is a diagram of a structure of an image processing apparatus according to an embodiment of this application. As shown in FIG. 14, the apparatus 500 includes:
a resource information obtaining module 510, configured to obtain resource information, where the resource information includes a real frame image, depth information of the real frame image, and pixel attribute information of the real frame image;
a first mesh layer creation module 520, configured to create a first mesh layer of the real frame image;
a reconstruction module 530, configured to create at least one second mesh layer if the real frame image includes a reconstructed region satisfying a first preset condition and/or a second preset condition, and draw pixels of the reconstructed region at the first mesh layer and the at least one second mesh layer respectively based on a reconstruction attribute of the reconstructed region, where the first preset condition is that the reconstructed region includes static pixels having different depth levels, and the second preset condition is that the reconstructed region includes both a static pixel and a dynamic pixel; and reconstruction attributes of pixels drawn at different mesh layers of the first mesh layer and the at least one second mesh layer are different, where the reconstruction attributes include a depth level and a pixel attribute; and
a motion vector obtaining module 540, configured to obtain a first motion vector corresponding to a first image in the first mesh layer and a second motion vector corresponding to each second image in each second mesh layer, where the first image refers to a real frame image region included in the first mesh layer; and the second image is a real frame image region included in the second mesh layer;
a first warped image generation module 550, configured to perform image warping processing on the first image based on the first motion vector to generate a first warped image;
a second warped image generation module 560, configured to perform image warping processing on each second image based on each second motion vector to generate at least one second warped image; and
a superimposition processing module 570, configured to perform superimposition processing on the first warped image and the at least one second warped image to generate a predicted frame image.

In a possible implementation, the reconstruction module 530 is specifically configured to create creating one second mesh layer if the real frame image includes a reconstructed region satisfying the first preset condition; draw a static pixel of a first depth level in the reconstructed region at the first mesh layer; and draw a static pixel of a second depth level in the reconstructed region at the second mesh layer, where the first depth level and the second depth level are different depth levels.

In a possible implementation, the reconstruction module 530 is specifically configured to create one second mesh layer if the real frame image includes a reconstructed region satisfying the second preset condition and depth levels of static pixels of each reconstructed region are the same; and draw a static pixel in the reconstructed region at the first mesh layer, and draw a dynamic pixel in the reconstructed region at the second mesh layer; or draw a dynamic pixel in the reconstructed region at the first mesh layer, and draw a static pixel in the reconstructed region at the second mesh layer.

In a possible implementation, the reconstruction module 530 is specifically configured to create two second mesh layers if the real frame image includes a reconstructed region satisfying the second preset condition and depth levels of static pixels of each reconstructed region are different, or if the real frame image includes a reconstructed region satisfying the first preset condition and the second preset condition; and draw a static pixel of a first depth level in the reconstructed region at the first mesh layer, draw a static pixel of a second depth level in the reconstructed region at a 1^{st} second mesh layer, and draw a dynamic pixel in the reconstructed region at a 2^{nd} second mesh layer; or draw a dynamic pixel in the reconstructed region at the first mesh layer, draw a static pixel of a first depth level in the reconstructed region at a 1^{st} second mesh layer, and draw a static pixel of a second depth level in the reconstructed region at a 2^{nd} second mesh layer; or draw a static pixel of a first depth level in the reconstructed region at the first mesh layer, draw a dynamic pixel in the reconstructed region at a 1^{st} second mesh layer, and draw a static pixel of a second depth level in the reconstructed region at a 2^{nd} second mesh layer, where the first depth level and the second depth level are different depth levels.

In a possible implementation, the apparatus further includes a marking module, configured to mark reconstruction information of each reconstructed region to obtain a marked map, where the reconstruction information includes reconstruction type information, depth level information, and pixel attribute information; and determine, based on the reconstruction type information, the depth level information, and the pixel attribute information, a quantity of second mesh layers and reconstruction attributes of pixels drawn at different mesh layers of the first mesh layer and the at least one second mesh layer.

In a possible implementation, the method further includes a reconstructed region determining module, configured to divide the real frame image into a plurality of working groups, where each working group includes a plurality of pixels; determine, based on the depth information of the real frame image and the pixel attribute information of the real frame image, that the working group including static pixels having different depth levels in the real frame image is the reconstructed region satisfying the first preset condition; and/or determine, based on the pixel attribute information of the real frame image, that the working group including both a static pixel and a dynamic pixel in the real frame image is the reconstructed region satisfying the second preset condition.

In a possible implementation, the reconstructed region determining module is specifically configured to determine, among the plurality of working groups based on the pixel attribute information of the real frame image, a first working group including a static pixel; determine, among the first working group based on the depth information of the real frame image, a second working group including a pixel whose depth value is within a preset range and differs from a depth value of a surrounding pixel by a preset threshold; determine a maximum depth value of each second working group; determine a minimum value of the maximum depth values as a depth threshold of the real frame image; determine, among the plurality of working groups, a third working group including a static pixel of the first depth level and a static pixel of the second depth level, where a depth value of the static pixel of the first depth level is greater than the depth threshold, and a depth value of the static pixel of the second depth level is less than or equal to the depth threshold; and determine the third working group as the reconstructed region satisfying the first preset condition.

In a possible implementation, the first warped image generation module 550 is specifically configured to set depth information of each first mesh in the first mesh layer; for each first mesh in the first mesh layer, determine a first motion vector of each vertex of the first mesh, and move the first mesh based on the first motion vector of each vertex of the first mesh; and when each first mesh is moved to a target position, determine a coverage relationship between the first mesh and another first mesh at the target position based on depth information of the first mesh and depth information of the another first mesh at the target position.

In a possible implementation, the second warped image generation module 560 is specifically configured to set depth information of each second mesh in the second mesh layer; for each second mesh in the second mesh layer, determine a second motion vector of each vertex of the second mesh, and move the second mesh based on the second motion vector of each vertex of the second mesh; and when each second mesh is moved to a target position, determine a coverage relationship between the second mesh and another second mesh at the target position based on the depth information of the second mesh and the depth information of the another second mesh at the target position.

In a possible implementation, the superimposition processing module 570 is specifically configured to determine a coverage relationship between a first mesh in the first mesh layer and a second mesh in each second mesh layer based on the depth information of each first mesh and the depth information of each second mesh when performing the superimposition processing on the first warped image and the at least one second warped image.

According to the method provided by embodiments of this application, an embodiment of this application further provides an electronic device, including a memory and a processor. The memory is coupled to the processor. The memory is configured to store computer program code. The computer program code includes computer instructions. When the one or more processors execute the computer instructions, the electronic device is enabled to perform the image processing method.

In an implementation process, the steps of the foregoing methods may be implemented by using a hardware integrated logic circuit in the processor or instructions in a form of software. The steps of the methods disclosed with reference to embodiments of this application may be directly implemented by a hardware processor, or may be performed by a combination of hardware in the processor and a software module. The software module may be stored in a storage medium that is mature in the art, such as a random access memory, a flash memory, a read-only memory, a programmable read-only memory, an electrically erasable programmable memory, or a register. The storage medium is located in the memory. The processor reads information in the memory and implements the steps of the methods in combination with hardware thereof. To avoid repetition, details are not described herein.

It should be noted that, the processor in embodiments of this application may be an integrated circuit chip, and has a signal processing capability. In an implementation process, the steps of the foregoing method embodiments may be implemented by using a hardware integrated logic circuit in the processor or instructions in a form of software. The processor may be a general-purpose processor, a digital signal processor (DSP), an application-specific integrated circuit (ASIC), a field programmable gate array (FPGA) or another programmable logic device, a discrete gate or transistor logic device, or a discrete hardware component, and may implement or perform the methods, the steps, and logic block diagrams that are disclosed in embodiments of this application. The general-purpose processor may be a microprocessor or any conventional processor or the like. The steps of the methods disclosed with reference to embodiments of this application may be directly implemented by a hardware decoding processor, or may be implemented by a combination of hardware in the decoding processor and a software module. The software module may be stored in a storage medium that is mature in the art, such as a random access memory, a flash memory, a read-only memory, a programmable read-only memory, an electrically erasable programmable memory, or a register. The storage medium is located in the memory. The processor reads information in the memory and implements the steps of the methods in combination with hardware thereof.

It may be understood that the memory in embodiments of this application may be a volatile memory or a non-volatile memory, or may include both volatile and non-volatile memories. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and serves as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory in the apparatus and method described herein is intended to include, but is not limited to, these and any other suitable types of memories.

According to the method provided by embodiments of this application, an embodiment of this application further provides a computer program product. The computer program product includes: a computer program or instructions. When the computer program or instructions are run on a computer, the computer is enabled to perform the method according to any one of the foregoing method embodiments.

According to the method provided by embodiments of this application, an embodiment of this application further provides a computer storage medium. The computer storage medium stores a computer program or instructions. When the computer program or instructions are run on a computer, the computer is enabled to perform the method according to any one of the foregoing method embodiments.

A person of ordinary skill in the art may be aware that various illustrative logical blocks (illustrative logical block) and steps (step) described with reference to embodiments disclosed in this specification can be implemented by electronic hardware or a combination of computer software and electronic hardware. Whether the functions are executed in a mode of hardware or software depends on particular applications and design constraint conditions of the technical solutions. A person skilled in the art may use different methods to implement the described functions for each particular application, but this implementation should not be considered as going beyond the scope of this application.

A person skilled in the art may clearly understand that, for the purpose of convenient and brief description, for a detailed working process of the apparatus and module described above, refer to a corresponding process in the method embodiments. Details are not described herein again.

In embodiments provided in this application, it should be understood that the disclosed apparatus and method may be implemented in other manners. For example, the foregoing apparatus embodiment is merely an example. For example, the division of the modules is merely logical function division and other division manners may be used in actual implementations. For example, a plurality of modules or components may be combined or integrated into another system, or some features may be ignored or not performed. In addition, the shown or discussed mutual couplings or direct couplings or communication connections may be implemented by using some interfaces. The indirect couplings or communication connections between the apparatuses or units may be implemented in electronic, mechanical, or other forms.

The modules described as separate components may or may not be physically separated, and the components shown as modules may or may not be physical units, and may be located in one place or may be distributed over a plurality of network units. Some or all of the units may be selected according to actual needs to achieve the objectives of the solutions of the embodiments.

In addition, functional modules in embodiments of this application may be integrated into one processing unit, or each of the modules may exist alone physically, or two or more modules may be integrated into one unit.

When the functions are implemented in a form of a software functional unit and sold or used as an independent product, the functions may be stored in a computer-readable storage medium. Based on such an understanding, the technical solutions of this application essentially, or the part contributing to conventional technologies, or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The apparatus, the computer storage medium, and the computer program product provided in embodiments of this application are all configured to execute the method provided above. Therefore, for beneficial effects that can be achieved, refer to the beneficial effects corresponding to the method provided above. Details are not described herein again.

It should be understood that in embodiments of this application, an execution sequence of the steps should be determined according to functions and internal logic of the steps, and sequence numbers of the steps do not mean an execution sequence, and do not limit an implementation process of embodiments.

The sections of this specification are all described in a progressive manner. For same or similar parts in embodiments, refer to these embodiments. Descriptions of each embodiment focus on a difference from other embodiments. In particular, embodiments of the apparatus, the computer storage medium, and the computer program product are similar to the method embodiments, and therefore are described briefly. For related parts, refer to the descriptions in the method embodiments.

Although example embodiments of this application have been described, a person skilled in the art can make additional changes and modifications to these embodiments upon learning the basic creative concept. Therefore, the following appended claims are intended to be construed as encompassing the example embodiments and all changes and modifications falling within the scope of this application.

The foregoing implementations of this application are not intended to limit the protection scope of this application.

## Claims

1. An image processing method, comprising:
obtaining resource information, wherein the resource information comprises a real frame image, depth information of the real frame image, and pixel attribute information of the real frame image, wherein the pixel attribute information is used to represent a static pixel and a dynamic pixel;
creating a first mesh layer of the real frame image;
creating at least one second mesh layer if the real frame image comprises a reconstructed region satisfying a first preset condition and/or a second preset condition, and drawing pixels of the reconstructed region at the first mesh layer and the at least one second mesh layer respectively based on a reconstruction attribute of the reconstructed region, wherein the first preset condition is that the reconstructed region comprises static pixels having different depth levels, and the second preset condition is that the reconstructed region comprises both a static pixel and a dynamic pixel; and reconstruction attributes of pixels drawn at different mesh layers of the first mesh layer and the at least one second mesh layer are different, wherein the reconstruction attribute comprises a depth level and a pixel attribute;
obtaining a first motion vector corresponding to a first image in the first mesh layer and a second motion vector corresponding to each second image in each second mesh layer, wherein the first image refers to a real frame image region comprised in the first mesh layer; and the second image refers to a real frame image region comprised in the second mesh layer;
performing image warping processing on the first image based on the first motion vector to generate a first warped image;
performing image warping processing on each second image based on each second motion vector to generate at least one second warped image; and
performing superimposition processing on the first warped image and the at least one second warped image to generate a predicted frame image.

2. The method according to claim 1, wherein creating the at least one second mesh layer if the real frame image comprises the reconstructed region satisfying the first preset condition and/or the second preset condition, and drawing the pixels of the reconstructed region at the first mesh layer and the at least one second mesh layer respectively based on the reconstruction attribute of the reconstructed region comprises:
creating one second mesh layer if the real frame image comprises a reconstructed region satisfying the first preset condition;
drawing a static pixel of a first depth level in the reconstructed region at the first mesh layer; and
drawing a static pixel of a second depth level in the reconstructed region at the second mesh layer, wherein the first depth level and the second depth level are different depth levels.

3. The method according to claim 1, wherein creating the at least one second mesh layer if the real frame image comprises the reconstructed region satisfying the first preset condition and/or the second preset condition, and drawing the pixels of the reconstructed region at the first mesh layer and the at least one second mesh layer respectively based on the reconstruction attribute of the reconstructed region comprises:
creating one second mesh layer if the real frame image comprises a reconstructed region satisfying the second preset condition and depth levels of static pixels of each reconstructed region are the same; and
drawing a static pixel in the reconstructed region at the first mesh layer, and drawing a dynamic pixel in the reconstructed region at the second mesh layer; or
drawing a dynamic pixel in the reconstructed region at the first mesh layer, and drawing a static pixel in the reconstructed region at the second mesh layer.

4. The method according to claim 1, wherein creating the at least one second mesh layer if the real frame image comprises the reconstructed region satisfying the first preset condition and/or the second preset condition, and drawing the pixels of the reconstructed region at the first mesh layer and the at least one second mesh layer respectively based on the reconstruction attribute of the reconstructed region comprises:
creating two second mesh layers if the real frame image comprises a reconstructed region satisfying the second preset condition and depth levels of static pixels of each reconstructed region are different, or if the real frame image comprises a reconstructed region satisfying the first preset condition and the second preset condition; and
drawing a static pixel of a first depth level in the reconstructed region at the first mesh layer, drawing a static pixel of a second depth level in the reconstructed region at a 1^{st} second mesh layer, and drawing a dynamic pixel in the reconstructed region at a 2^{nd} second mesh layer; or
drawing a dynamic pixel in the reconstructed region at the first mesh layer, drawing a static pixel of a first depth level in the reconstructed region at a 1^{st} second mesh layer, and drawing a static pixel of a second depth level in the reconstructed region at a 2^{nd} second mesh layer; or
drawing a static pixel of a first depth level in the reconstructed region at the first mesh layer, drawing a dynamic pixel in the reconstructed region at a 1^{st} second mesh layer, and drawing a static pixel of a second depth level in the reconstructed region at a 2^{nd} second mesh layer, wherein
the first depth level and the second depth level are different depth levels.

5. The method according to any one of claims 1 to 4, wherein the method further comprises:
marking reconstruction attribute information of each reconstructed region to obtain a marked map, wherein the reconstruction attribute information comprises reconstruction type information and depth level information; and
determining, based on the reconstruction type information and the depth level information, a quantity of second mesh layers and reconstruction attributes of pixels drawn at different mesh layers of the first mesh layer and the at least one second mesh layer.

6. The method according to any one of claims 1 to 4, wherein the method further comprises:
dividing the real frame image into a plurality of working groups, wherein each working group comprises a plurality of pixels;
determining, based on the depth information of the real frame image and the pixel attribute information of the real frame image, that the working group comprising static pixels having different depth levels in the real frame image is the reconstructed region satisfying the first preset condition; and/or
determining, based on the pixel attribute information of the real frame image, that the working group comprising both a static pixel and a dynamic pixel in the real frame image is the reconstructed region satisfying the second preset condition.

7. The method according to claim 6, wherein determining, based on the depth information of the real frame image and the pixel attribute information of the real frame image, that the working group comprising the static pixels having the different depth levels in the real frame image is the reconstructed region satisfying the first preset condition comprises:
determining, among the plurality of working groups based on the pixel attribute information of the real frame image, a first working group comprising a static pixel;
determining, among the first working group based on the depth information of the real frame image, a second working group comprising a pixel whose depth value is within a preset range and differs from a depth value of a surrounding pixel by a preset threshold;
determining a maximum depth value of each second working group;
determining a minimum value of maximum depth values as a depth threshold of the real frame image;
determining, among the plurality of working groups, a third working group comprising a static pixel of the first depth level and a static pixel of the second depth level, wherein a depth value of the static pixel of the first depth level is greater than the depth threshold, and a depth value of the static pixel of the second depth level is less than or equal to the depth threshold; and
determining the third working group as the reconstructed region satisfying the first preset condition.

8. The method according to claim 1, wherein performing the image warping processing on the first image based on the first motion vector to generate the first warped image comprises:
setting depth information of each first mesh in the first mesh layer;
for each first mesh in the first mesh layer, determining a first motion vector of each vertex of the first mesh, and moving the first mesh based on the first motion vector of each vertex of the first mesh; and
when each first mesh is moved to a target position, determining a coverage relationship between the first mesh and another first mesh at the target position based on depth information of the first mesh and depth information of the another first mesh at the target position.

9. The method according to claim 8, wherein performing the image warping processing on each second image based on each second motion vector to generate the at least one second warped image comprises:
setting depth information of each second mesh in the second mesh layer;
for each second mesh in the second mesh layer, determining a second motion vector of each vertex of the second mesh, and moving the second mesh based on the second motion vector of each vertex of the second mesh; and
when each second mesh is moved to a target position, determining a coverage relationship between the second mesh and another second mesh at the target position based on depth information of the second mesh and depth information of the another second mesh at the target position.

10. The method according to claim 9, wherein performing the superimposition processing on the first warped image and the at least one second warped image to generate the predicted frame image comprises:
determining a coverage relationship between a first mesh in the first mesh layer and a second mesh in each second mesh layer based on the depth information of each first mesh and the depth information of each second mesh when performing the superimposition processing on the first warped image and the at least one second warped image.

11. The method according to claim 1, wherein the resource information is resource information in a gaming application.

12. An image processing apparatus, wherein the apparatus comprises:
a resource information obtaining module, configured to obtain resource information, wherein the resource information comprises a real frame image, depth information of the real frame image, and pixel attribute information of the real frame image, wherein the pixel attribute information is used to represent a static pixel and a dynamic pixel;
a first mesh layer creation module, configured to create a first mesh layer of the real frame image;
a reconstruction module, configured to create at least one second mesh layer if the real frame image comprises a reconstructed region satisfying a first preset condition and/or a second preset condition, and draw pixels of the reconstructed region at the first mesh layer and the at least one second mesh layer respectively based on a reconstruction attribute of the reconstructed region, wherein the first preset condition is that the reconstructed region comprises static pixels having different depth levels, and the second preset condition is that the reconstructed region comprises both a static pixel and a dynamic pixel; and reconstruction attributes of pixels drawn at different mesh layers of the first mesh layer and the at least one second mesh layer are different, wherein the reconstruction attribute comprises a depth level and a pixel attribute;
a motion vector obtaining module, configured to obtain a first motion vector corresponding to a first image in the first mesh layer and a second motion vector corresponding to each second image in each second mesh layer, wherein the first image refers to a real frame image region comprised in the first mesh layer; and the second image refers to a real frame image region comprised in the second mesh layer;
a first warped image generation module, configured to perform image warping processing on the first image based on the first motion vector to generate a first warped image;
a second warped image generation module, configured to perform image warping processing on each second image based on each second motion vector to generate at least one second warped image; and
a superimposition processing module, configured to perform superimposition processing on the first warped image and the at least one second warped image to generate a predicted frame image.

13. An electronic device, comprising a memory and a processor, wherein the memory is coupled to the processor; and the memory is configured to store computer program code, the computer program code comprises computer instructions, and when the processor executes the computer instructions, the electronic device is caused to perform the method according to any one of claims 1 to 11.

14. A computer storage medium, wherein the computer storage medium stores a computer program or instructions, and when the computer program or the instructions are executed, the method according to any one of claims 1 to 11 is performed.
